# EUROPEAN PATENT APPLICATION

(11) **EP 4 645 287 A1**
(43) Date of publication of application: **05.11.2025**
(21) Application number: 23916450.2
(22) Date of filing: 21.12.2023
(51) Int. Cl.: G09F 9/30, G06F 1/16, F16H 57/02, F16H 19/04, H04M 1/02

(54) **ROLLABLE DISPLAY AND ELECTRONIC DEVICE COMPRISING SAME**

(30) Priority: 12.01.2023 KR 20230004666; 19.01.2023 KR 20230008249
(71) Applicant: Samsung Electronics Co., Ltd., Suwon-si, Gyeonggi-do 16677 (KR)
(72) Inventor: AHN, Jaeuk, Suwon-si Gyeonggi-do 16677 (KR); KANG, Jooyoung, Suwon-si Gyeonggi-do 16677 (KR); KANG, Hyunggwang, Suwon-si Gyeonggi-do 16677 (KR); CHO, Hyoungtak, Suwon-si Gyeonggi-do 16677 (KR); KIM, Sukdong, Suwon-si Gyeonggi-do 16677 (KR); SEO, Soohyun, Suwon-si Gyeonggi-do 16677 (KR); YOON, Byounguk, Suwon-si Gyeonggi-do 16677 (KR)
(74) Representative: Nederlandsch Octrooibureau
(86) International application number: PCT/KR2023/021335
(87) International publication number: WO 2024/150967

(57) **Abstract**

According to an embodiment of the present disclosure, an electronic device may comprise: a first housing; a second housing configured to be slid with respect to the first housing; a flexible display including a first display region and a second display region extending from the first display region, and configured such that the second display region is moved on the basis of sliding of the second housing; a battery disposed in the first housing; a rack gear coupled to the first housing; a motor drive unit disposed in the second housing, connected to the rack gear, and configured to provide driving power for sliding the second housing; and a rack guide disposed in the second housing and covering at least a part of the rack gear. Various other embodiments may also be possible.

## Description

### [Technical Field]

Various embodiments of the disclosure relate to an electronic device, for example, a flexible display and an electronic device including the same.

### [Background Art]

Thanks to the remarkable development of information and communication technology and semiconductor technology, the proliferation and use of various electronic devices are rapidly increasing. In particular, recent electronic devices have been developed to enable communication while being carried.

An electronic device may refer to a device that executes a specific function according to a loaded program, such as a home appliance, an electronic notebook, a portable multimedia player, a mobile communication terminal, a tablet PC, a video/audio device, a desktop/laptop computer, or a vehicle navigation device. For example, these electronic devices may output stored information as sound or an image. As the integration level of electronic devices increases and high-speed, large-capacity wireless communication becomes more common, a single electronic device such as a mobile communication terminal may recently be equipped with various functions. For example, in addition to a communication function, an entertainment function such as games, a multimedia function such as music/video playback, a communication and security function for mobile banking, and a function such as schedule management or an electronic wallet are integrated in a single electronic device. These electronic devices are being miniaturized so that users may carry them conveniently.

As mobile communication services expand into the multimedia service area, the display size of an electronic device may increase to enable a user to fully use multimedia services in addition to voice calls and text messages.

### [Detailed Description of the Invention]

### [Technical Solution]

According to an embodiment of the disclosure, an electronic device may include a first housing, a second housing configured to slide relative to the first housing, a flexible display including a first display area and a second display area extending from the first display area, the second display area configured to move based on the sliding movement of the second housing, a battery disposed in the first housing, a rack gear coupled to the first housing, a motor driver disposed in the second housing and configured to provide a driving force for the sliding movement of the second housing by being connected to the rack gear, and a rack guide disposed in the second housing and surrounding at least a portion of the rack gear.

According to an embodiment of the disclosure, an electronic device may include a first housing, a second housing configured to slide relative to the first housing, a flexible display including a first display area and a second display area extending from the first display area, the second display area configured to move based on the sliding movement of the second housing, a battery disposed in the first housing, a rack gear coupled to the first housing, a motor driver disposed in the second housing and configured to provide a driving force for the sliding movement of the second housing by being connected to the rack gear, and a rack guide disposed in the second housing, configured to slide relative to the rack guide, and surrounding at least a portion of the rack gear. At least a portion of the rack gear may overlap the battery in a first direction which is a sliding movement direction of the second housing.

### [Brief Description of Drawings]

FIG. 1 is a block diagram illustrating an electronic device in a network environment according to various embodiments.
FIG. 2 is a diagram illustrating a state in which a second display area of a display is accommodated within a housing according to an embodiment of the disclosure.
FIG. 3 is a diagram illustrating a state in which a second display area of a display is exposed to the outside of a housing according to an embodiment of the disclosure.
FIG. 4 is an exploded perspective view illustrating an electronic device according to an embodiment of disclosure.
FIG. 5A is a cross-sectional view taken along line A-A' of FIG. 2 according to an embodiment of disclosure.
FIG. 5B is a cross-sectional view taken along line B-B' of FIG. 3 according to an embodiment of disclosure.
FIG. 6 is an exploded perspective view illustrating an electronic device according to an embodiment of disclosure.
FIG. 7 is a plan view illustrating an electronic device according to an embodiment of disclosure.
FIG. 8 is a plan view illustrating an electronic device according to an embodiment of disclosure.
FIG. 9 is a diagram illustrating a frame and a rack gear according to an embodiment of disclosure.
FIG. 10 is a plan view illustrating an electronic device in a slide-in state according to an embodiment of disclosure.
FIG. 11 is a plan view illustrating an electronic device in an intermediate state according to an embodiment of disclosure.
FIG. 12 is a plan view illustrating an electronic device in a slide-out state according to an embodiment of disclosure.
FIG. 13 is a cross-sectional perspective view illustrating an electronic device according to an embodiment of disclosure.
FIG. 14 is a plan view illustrating an electronic device according to an embodiment of disclosure.
FIG. 15 is a plan view illustrating an electronic device viewed from an opposite direction to FIG. 14 according to an embodiment of disclosure.
FIG. 16 is a diagram illustrating a rack guide according to an embodiment of disclosure.
FIG. 17 is a perspective view illustrating a rack guide according to an embodiment of disclosure.
FIG. 18 is a cross-sectional view illustrating a rack gear and a rack guide according to an embodiment of disclosure.
FIG. 19 is a perspective view illustrating an electronic device according to an embodiment of disclosure.
FIG. 20 is a cross-sectional perspective view illustrating an electronic device according to an embodiment of disclosure.
FIG. 21 is a plan view illustrating an electronic device according to an embodiment of disclosure.
FIG. 22 is a plan view illustrating an electronic device viewed from an opposite direction to FIG. 21 according to an embodiment of disclosure.
FIG. 23 is a cross-sectional view illustrating a rack gear and a rack guide according to an embodiment of disclosure.
FIG. 24 is a perspective view illustrating a rack gear and a frame according to an embodiment of disclosure.
FIG. 25 is a plan view illustrating a second cover member and a rack guide according to an embodiment of disclosure.
FIG. 26 is a perspective view illustrating a driving structure and a rack guide according to an embodiment of disclosure.
FIG. 27 is a cross-sectional view illustrating a driving structure and a rack guide according to an embodiment of disclosure.

### [Mode for Carrying out the Invention]

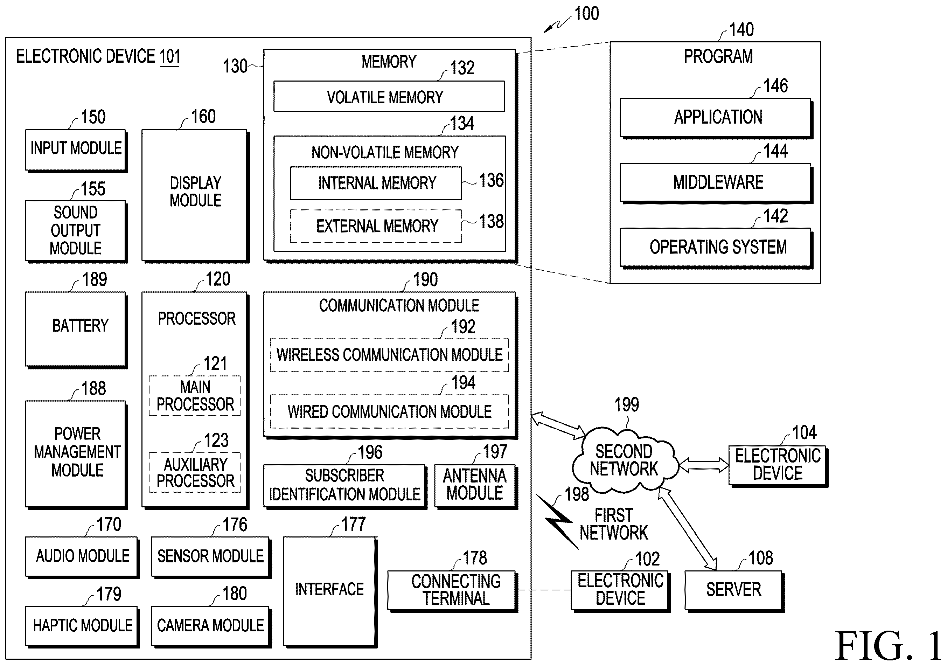

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

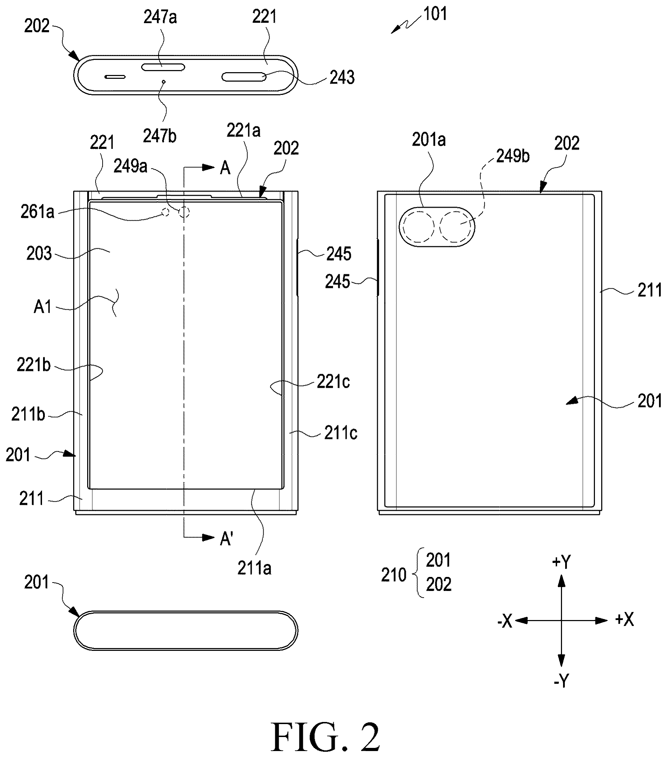

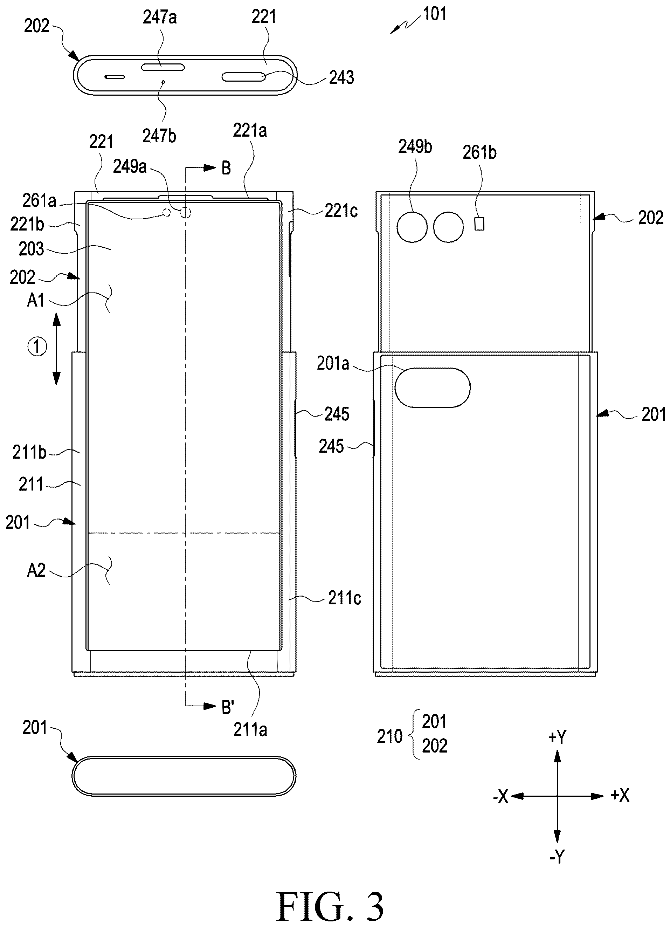

FIG. 2 is a diagram illustrating a state in which a second display area (e.g., a display area A2 of FIG. 3) of a display is accommodated in a housing according to an embodiment of the disclosure. FIG. 3 is a diagram illustrating a state in which the second display area of the display is exposed to the outside of the housing according to an embodiment of the disclosure.

FIGS. 2 and 3 illustrate a structure in which a display 203 (e.g., a flexible display or rollable display) extends in a longitudinal direction (e.g., +Y direction), when viewed from the front of the electronic device 101. However, the direction of extension of the display 203 is not limited to one direction (e.g., +Y direction). For example, a design modification may be made such that the display 203 is extendable in an upward direction (e.g., +Y direction), a right direction (e.g., +X direction), a left direction (e.g., -X direction), and/or a downward direction (e.g., -Y direction).

The state illustrated in FIG. 2 may be defined as a slide-in state of the electronic device 101 or a closed state of the second display area A2 of the display 203.

The state illustrated in FIG. 3 may be defined as a slide-out state of the electronic device 101 or an opened state of the second display area A2 of the display 203.

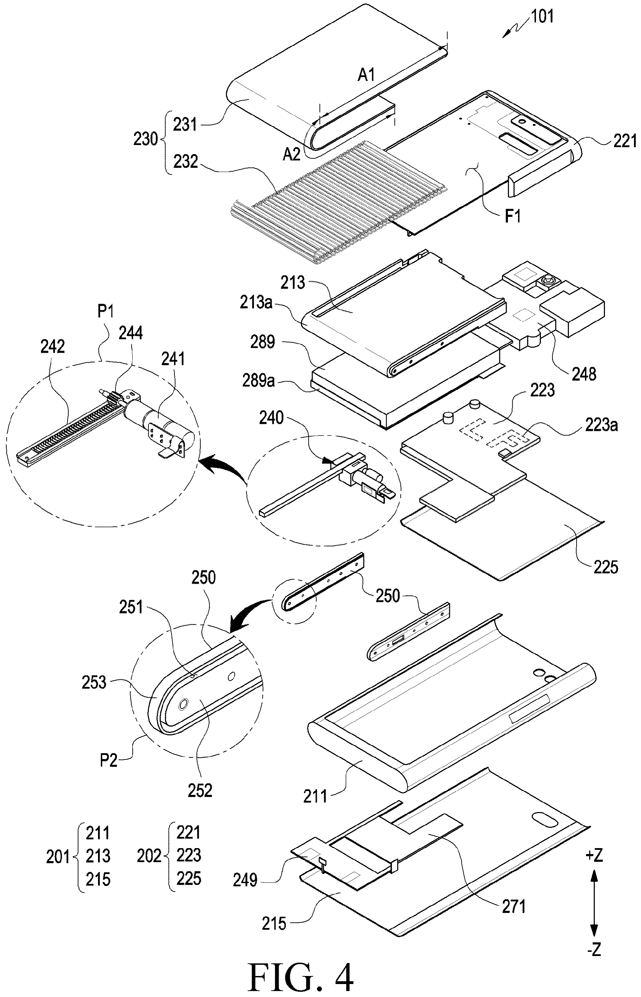

The embodiments of FIGS. 2 and 3 may be combined with the embodiment of FIG. 1 or the embodiments of FIGS. 4 to 19.

Referring to FIGS. 2 and 3, the electronic device 101 (e.g., the electronic device 101 of FIG. 1) may include a housing 210. The housing 210 may include a first housing 201 and a second housing 202 disposed to be movable with respect to the first housing 201. In an embodiment, it may be interpreted as a structure in which the first housing 201 is disposed to be slidable with respect to the second housing 202 in the electronic device 101. According to an embodiment, the second housing 202 may be disposed to be reciprocable by a predetermined distance in a direction illustrated with respect to the first housing 201, for example, in a direction indicated by an arrow ①.

According to an embodiment, the second housing 202 may be referred to as a slide part or a slide housing, and movable with respect to the first housing 201. According to an embodiment, the second housing 202 may accommodate various electrical and electronic components such as a circuit board or a battery.

According to an embodiment, the slide-in state of the electronic device 101 (or the slide-out state of the electronic device 101) may be changed to the slide-out state of the electronic device 101 (or the slide-in state of the electronic device 101) based on a predefined user input. For example, the slide-in state of the electronic device 101 (or the slide-out state of the electronic device 101) may be changed to the slide-out state (or the slide-in state of the electronic device 101) in response to a user input to a physical button exposed through a portion of the first housing 201 or a portion of the second housing 202. For example, the slide-in state (or the slide-out state of the electronic device 101) may be changed to the slide-out state (or the slide-in state of the electronic device 101) in response to a touch input to an executable object displayed in a screen display area (e.g., a first display area A1). For example, the slide-in state (or the slide-out state of the electronic device 101) may be changed to the slide-out state (or the slide-in state of the electronic device 101) in response to a touch input having a contact point on the screen display area (e.g., the first display area A1) and having a strength equal to or greater than a reference level. For example, the slide-in state (or the slide-out state of the electronic device 101) may be changed to the slide-out state (or the slide-in state of the electronic device 101) in response to a voice input received through a microphone. For example, the slide-in state (or the slide-out state of the electronic device 101) may be changed to the slide-out state (or the slide-in state of the electronic device 101) in response to an external force applied to the first housing 201 and/or the second housing 202 to move the second housing 202 with respect to the first housing 201. For example, the slide-in state (or the slide-out state of the electronic device 101) may be changed to the slide-out state (or the slide-in state of the electronic device 101) in response to a user input identified from an external electronic device (e.g., earbuds or a smart watch) connected to the electronic device 101. However, the slide-in/slide-out operation of the electronic device 101 is not limited thereto.

According to an embodiment, the first housing 201 may accommodate a motor, a speaker, a SIM socket, and/or a sub-circuit board electrically connected to a main circuit. The second housing 202 may accommodate the main circuit board with electrical components such as an application processor (AP) and a communication processor (CP) mounted thereon. According to an embodiment, the second housing may accommodate the sub-circuit board electrically connected to the motor, the speaker, the SIM socket, and/or the main circuit board, and the first housing 201 may accommodate the main circuit board with electrical components such as an AP and a CP mounted thereon. According to an embodiment, the sub-circuit board and the main circuit board may be disposed in the first housing 201 or the second housing 202.

According to an embodiment, the first housing may include a first cover member 211 (e.g., a main case). The first cover member 211 may include a (1-1)^{th} sidewall 211a, a (1-2)^{th} sidewall 211b extending from the (1-1)^{th} sidewall 211a, and a (1-3)^{th} sidewall 211c extending from the (1-1)^{th} sidewall 211a and substantially parallel to the (1-2)^{th} sidewall 211b. According to an embodiment, the (1-2)^{th} sidewall 211b and the (1-3)^{th} sidewall 211c may be formed substantially perpendicular to the (1-1)^{th} sidewall 211a.

According to an embodiment, the (1-1)^{th} sidewall 211a, the (1-2)^{th} sidewall 211b, and the (1-3)^{th} sidewall 211c of the first cover member 211 may be formed with one side (e.g., a front surface) open to accommodate (or surround) at least a portion of the second housing 202. For example, the second housing 202 may be at least partially surrounded by the first housing 201 and slide in a direction parallel to a first surface (e.g., a first surface F1 in FIG. 4), for example, in the direction of the arrow ①, while being guided by the first housing 201. According to an embodiment, the (1-1)^{th} sidewall 211a, the (1-2)^{th} sidewall 211b, and/or the (1-3)^{th} sidewall 211c of the first cover member 211 may be integrally formed. According to an embodiment, the (1-1)^{th} sidewall 211a, the (1-2)^{th} sidewall 211b, and/or the (1-3)^{th} sidewall 211c of the first cover member 211 may be formed as separate housings and coupled or assembled.

According to an embodiment, the first cover member 211 may be formed to surround at least a portion of the display 203. For example, at least a portion of the display 203 may be formed to be surrounded by the (1-1)^{th} sidewall 211a, the (1-2)^{th} sidewall 211b, and/or the (1-3)^{th} sidewall 211c of the first cover member 211.

According to an embodiment, the second housing 202 may include a second cover member 221 (e.g., a slide plate). The second cover member 221 may have a plate shape and include the first surface (e.g., the first surface F1 in FIG. 4) supporting internal components. For example, the second cover member 221 may support at least a portion (e.g., the first display area A1) of the display 203. According to an embodiment, the second cover member 221 may be referred to as a front cover.

According to an embodiment, the second cover member 221 may include a (2-1)^{th} sidewall 221a, a (2-2)^{th} sidewall 221b extending from the (2-1)^{th} sidewall 221a, and a (2-3)^{th} sidewall 221c extending from the (2-1)^{th} sidewall 221a and substantially parallel to the (2-2)^{th} sidewall 221b. According to an embodiment, the (2-2)^{th} sidewall 221b and the (2-3)^{th} sidewall 221c may be formed substantially perpendicular to the (2-1)^{th} sidewall 221a.

According to various embodiments, the second housing 202 may move in a first direction (e.g., the direction ①) parallel to the (2-2)^{th} sidewall 221b or the (2-3)^{th} sidewall 221c, forming the slide-in state and slide-out state of the electronic device 101. The second housing 202 may move to be located at a first distance from the (1-1)^{th} sidewall 211a of the first hosing 201 in the slid-in state of the electronic device 101 and at a second distance larger than the first distance from the (1-1)^{th} sidewall 211a of the first hosing 201 in the slide-out state of the electronic device 101. In an embodiment, the first housing 201 may be formed to surround a portion of the (2-2)^{th} sidewall 221b and a portion of the (2-3)^{th} sidewall 221c in the slide-in state of the electronic device 101.

According to an embodiment, the electronic device 101 may have an intermediate state between the slide-in state (e.g., a fully closed state in FIG. 2) and the slide-out state (e.g., a fully opened state in FIG. 3). The distance between the (1-1)^{th} sidewall 211a and the (2-1)^{th} sidewall 221a in the intermediate state of the electronic device 101 may be smaller than the distance between the (1-1)^{th} sidewall 211a and the (2-1)^{th} sidewall 221a in the fully opened state of the electronic device 101, and greater than the distance between the (1-1)^{th} sidewall 211a and the (2-1)^{th} sidewall 221a in the fully closed state of the electronic device 101. According to an embodiment, as at least a portion of the display 203 slides in the intermediate state of the electronic device 101, an area exposed to the outside may vary. For example, in the intermediate state of the electronic device 101, the ratio between the width (an X-direction length) and height (a Y-direction length) of the display 203 and/or the distance between the (1-1)^{th} sidewall 211a and the (2-1)^{th} sidewall 221a may be changed based on sliding movement of the electronic device 101.

According to an embodiment, the electronic device 101 may include the display 203, key input devices 245, a connector hole 243, audio modules 247a and 247b, or camera modules 249a and 249b. According to an embodiment, the electronic device 101 may further include an indicator (e.g., an LED device) or various sensor modules.

According to various embodiments, the display 203 may include the first display area A1 and the second display area A2 configured to be exposed to the outside of the electronic device 101 based on sliding movement of the housing 210. According to an embodiment, the first display area A1 may be disposed on the second housing 202. For example, the first display area A1 may be disposed on the second cover member 221 of the second housing 202. According to an embodiment, the second display area A2 may extend from the first display area A1, and as the first housing 201 slides with respect to the second housing 202, the second display area A2 may be accommodated into the first housing 201 or visually exposed to the outside of the electronic device 101. According to an embodiment, as the electronic device 101 is changed from the slide-out state to the slide-in state, the display 203 may extend in a downward direction (e.g., -Y direction). For example, in the slide-out state of the electronic device 101, the second display area A2 may be visually exposed under the display 203 (e.g., in the -Y direction). According to an embodiment, as the electronic device 101 is changed from the slide-in state to the slide-out state, the display 203 may extend in an upward direction (e.g., +Y direction). For example, in the slide-out state of the electronic device 101, the second display area A2 may be visually exposed on the display 203 (e.g., in the +Y direction).

According to an embodiment, the second display area A2 may be accommodated into an internal space of the housing 210 or exposed to the outside of the electronic device 101 by moving while being guided substantially by an area (e.g., a curved surface 213a of FIG. 4) of the first housing. According to an embodiment, the second display area A2 may move based on the sliding movement of the second housing 202 in the first direction (e.g., the direction indicated by the arrow ①). For example, a portion of the second display area A2 may be deformed into a curved surface at a position corresponding to the curved surface 213a of the first housing 201 during the sliding movement of the second housing 202.

According to an embodiment, when viewed from above the second cover member 221 (e.g., a front cover), when the electronic device 101 is changed from the slide-in state to the slide-out state (e.g., the second housing 202 slides to extend from the first housing 201), the second display area A2 may form a substantially flat surface with the first display area A1, while gradually being exposed to the outside of the first housing 201. According to an embodiment, the display 203 may be coupled to or disposed adjacent to a touch sensing circuit, a pressure sensor capable of measuring the intensity (pressure) of a touch, and/or a digitizer that detects a magnetic stylus pen. According to an embodiment, regardless of the slide-in or slide-out state of the electronic device 101, an exposed portion of the second display area A2 may be located on a portion (e.g., the curved surface 213a of FIG. 4) of the first housing, and a portion of the second display area A2 may maintain a curved shape at the position corresponding to the curved surface 213a.

According to an embodiment, the key input devices 245 may be located in an area of the housing 210 (e.g., the first housing 201 and/or the second housing 202). Depending on the appearance and a use state, the electronic device 101 may be designed to be without the illustrated key input devices 245 or to include additional key input device(s). According to an embodiment, the electronic device 101 may include a key input device not shown, such as a home key button or a touch pad disposed around the home key button. According to an embodiment, at least some of the key input devices 245 may be disposed on the (1-1)^{th} sidewall 211a, the (1-2)^{th} sidewall 211b, and/or the (1-3)^{th} sidewall 211c of the first housing 201. According to an embodiment, at least some of the key input devices 245 may be disposed on the (2-1)^{th} sidewall 221a, the (2-2)^{th} sidewall 221b, and/or the (2-3)^{th} sidewall 221c of the second housing 202.

According to an embodiment, the connector hole 243 may be omitted depending on an embodiment, and may accommodate a connector (e.g., a USB connector) for transmitting power and/or data to and from an external electronic device. According to an embodiment (not shown), the electronic device 101 may include a plurality of connector holes 243, and some of the plurality of connector holes 243 may function as connector holes for transmitting and receiving audio signals to and from an external electronic device. In the illustrated embodiment, the connector hole 243 is disposed on the second housing 202, to which the disclosure is not limited. The connector hole 243 or a connector hole not shown may be disposed on the first housing 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound, and the microphone may obtain sound external to the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as a single hole, or include a speaker (e.g., a piezo speaker) without the speaker hole 247a. According to an embodiment, the speaker hole 247a and the microphone hole 247b may be located in the first housing 201 and/or the second housing 202.

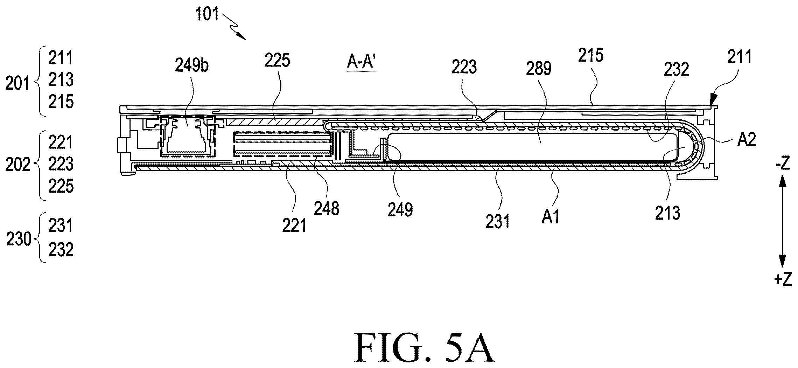

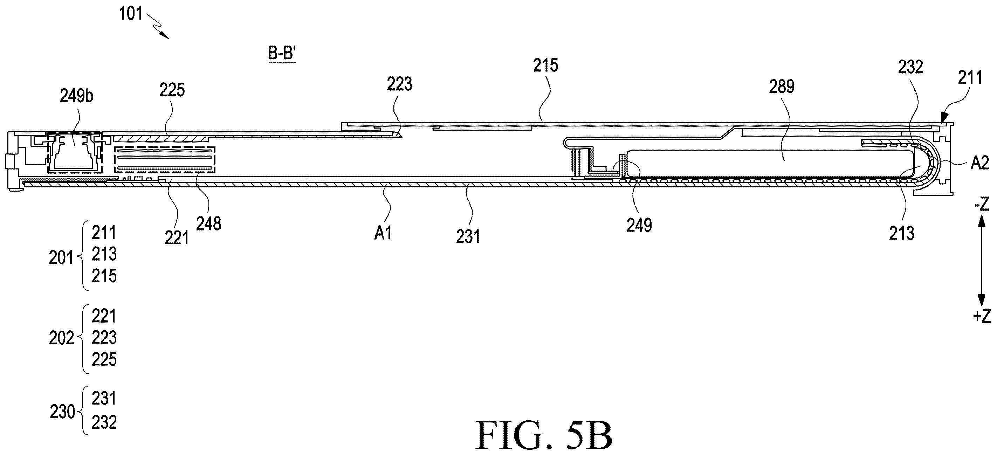

According to an embodiment, the camera modules 249a and 249b may include a first camera module 249a (e.g., front camera) and a second camera module 249b (e.g., rear camera) (e.g., the second camera module 249b in FIGS. 5A and 5B). According to an embodiment, the electronic device 101 may include at least one of a wide-angle camera, a telephoto camera, or a close-up camera, and according to an embodiment, include an IR projector and/or an IR receiver to measure a distance to a subject. The camera modules 249a and 249b may include one or more lenses, an image sensor, and/or an image signal processor. The first camera module 249a may be disposed to face in the same direction as the display 203. For example, the first camera module 249a may be disposed around the first display area A1 or in an area overlapping the display 203 and, when disposed in the area overlapping the display 203, may be able to capture a subject through the display 203. According to an embodiment, the first camera module 249a may not be visually exposed to a screen display area (e.g., the first display area A1) and include a hidden under display camera (UDC). According to an embodiment, the second camera module 249a may capture a subject in a direction opposite to the display A1. According to an embodiment, the first camera module 249a and/or the second camera module 249b may be disposed on the second housing 202. According to an embodiment, a plurality of second camera modules 249b may be formed and arranged in various manners. For example, the plurality of second camera modules 249b may be arranged along the width direction (X-axis direction) substantially perpendicular to a sliding movement direction (e.g., Y-axis direction) of the electronic device 101. In another example, the plurality of second camera modules 249b may be arranged along the sliding movement direction (e.g., Y-axis direction) of the electronic device 101. In another example, the plurality of second camera modules 249b may be arranged in N*M rows and columns like a matrix.

According to an embodiment, the second camera module 249b may not be visually exposed to the outside of the electronic device 101 in the slide-in state of the electronic device 101, and may capture the outside of the electronic device 101 in the slide-out state of the electronic device 101. According to an embodiment, the second camera module 249b may capture the outside of the electronic device 101 in the slide-in state and/or slide-out state of the electronic device 101. For example, at least a portion (e.g., a first rear plate 215 and/or a second rear plate 225 in FIG. 4) of the housing 210 may be substantially transparent, and the second camera module 249b may capture the outside of the electronic device 101 through the first rear plate 215 and/or the second rear plate 225. According to an embodiment, in the slide-in state and slide-out state of the electronic device 101, the second camera module 249b may be visually exposed to the outside of the electronic device 101 and capture the outside. For example, the first housing 201 (e.g., the first rear plate 215 in FIG. 4) may include an opening 201a for the second camera module 249b.

According to an embodiment, an indicator (not shown) of the electronic device 101 may be disposed in the first housing 201 or the second housing 202, and include an LED to provide state information about the electronic device 101 as a visual signal. Sensor modules 261a and 261b of the electronic device 101 may generate an electrical signal or data value corresponding to an internal operational state or an external environmental state of the electronic device 101. The sensor modules 261a and 261b may include a proximity sensor, a fingerprint sensor, and/or a biometric sensor (e.g., an iris/facial recognition sensor or an HRM sensor). In an embodiment, the sensor modules 261a and 261b may further include at least one of a gesture sensor, a gyro sensor, a barometric pressure sensor, a magnetic sensor, an acceleration sensor, a grip sensor, a color sensor, an IR sensor, a temperature sensor, a humidity sensor, or an illuminance sensor. According to an embodiment, the sensor modules 261a and 261b may be disposed in the first housing 201 and/or the second housing 202. For example, the sensor modules 261a and 261b may include a first sensor module 261a (e.g., a proximity sensor or an illuminance sensor) disposed on the front surface of the electronic device 101 and/or a second sensor module 261b (e.g., a heart rate monitoring (HRM) sensor) disposed on the rear surface of the electronic device 101.

FIG. 4 is an exploded perspective view illustrating an electronic device according to an embodiment of the disclosure.

FIG. 5A is a cross-sectional view taken along line A-A' of FIG. 2 according to an embodiment of the disclosure.

FIG. 5B is a cross-sectional view taken along line B-B' of FIG. 3 according to an embodiment of the disclosure.

Referring to FIG. 4, FIG. 5A, and/or FIG. 5B, the electronic device 101 (e.g., the electronic device 101 of FIGS. 1 to 3) may include the first housing 201, the second housing 202, a display assembly 230, and a driving structure 240. The configurations of the first housing 201, the second housing 202, and the display assembly 230 in FIG. 4, FIG. 5A, and/or FIG. 5B may be wholly or partially identical to those of the first housing 201, the second housing 202, and the display 231 in FIG. 2 and/or FIG. 3.

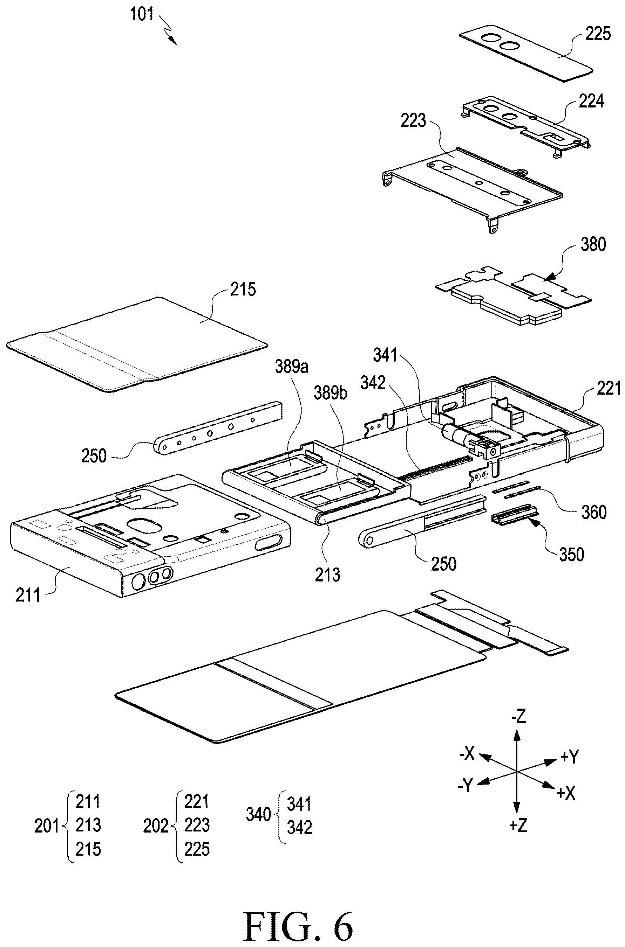

The embodiments of FIGS. 4 to 5B may be partially combined with the embodiments of FIGS. 1 to 3 or the embodiments of FIGS. 6 to 27.

According to an embodiment, the first housing 201 may include the first cover member 211 (e.g., the first cover member 211 in FIGS. 2 and 3), the frame 213, and the first rear plate 215.

According to an embodiment, the first cover member 211 may accommodate at least a portion of the frame 213 and a component (e.g., a battery 289) located on the frame 213. According to an embodiment, the first cover member 211 may be formed to surround at least a portion of the second housing 202. According to an embodiment, the first cover member 211 may protect components (e.g., a second circuit board 249 and the frame 213) located in the first housing from external impact. According to an embodiment, the second circuit board 249 electrically connected to electrical components (e.g., a motor, a speaker, a SIM socket, and/or a first circuit board 248) may be connected to the first cover member 211. The frame 213 may be referred to as a first frame 213.

According to an embodiment, the frame 213 may be connected to the first cover member 211. For example, the frame 213 may be connected to the first cover member 211, and the second housing 202 may move relative to the first cover member 211 and/or the frame 213. According to an embodiment, the frame 213 may accommodate the battery 289. For example, the frame 213 may include a groove for accommodating the battery 289 therein. The frame 213 may be connected to a battery cover 289a and surround at least a portion of the battery 289, together with the battery cover 289a. According to an embodiment, the frame 213 may include the curved surface 213a facing the display assembly 230.

According to an embodiment, the first rear plate 215 may substantially form at least a portion of the exterior of the first housing 201 or the electronic device 101. For example, the first rear plate 215 may be coupled to an outer surface of the first cover member 211. According to an embodiment, the first rear plate 215 may provide a decorative effect on the exterior of the electronic device 101. The first rear plate 215 may be manufactured using at least one of metal, glass, synthetic resin, or ceramic.

According to an embodiment, the second housing 202 may include the second cover member 221 (e.g., the second cover member 221 in FIGS. 2 and 3), a rear cover 223, and a second rear plate 225.

According to an embodiment, the second cover member 221 may be connected to the first housing 201 through a guide rail 250 and reciprocate in a straight line in one direction (e.g., the direction of the arrow ① in FIGS. 2 and 3) while being guided by the guide rail 250. The second cover member 221 may be referred to as a second frame 221. The second frame 221 may be configured to slide relative to the first frame 213.

According to embodiments, the second cover member 221 may support at least a portion of the display 231. For example, the second cover member 221 may include the first surface F1, and the first display area A1 of the display 231 may be substantially located on the first surface F1 and maintained in a flat shape. According to an embodiment, the second cover member 221 may be formed of a metallic material and/or a non-metallic (e.g., polymer) material. According to an embodiment, a first circuit board 248 accommodating electronic components (e.g., the processor 120 and/or the memory 130 in FIG. 1) may be connected to the second cover member 221. According to an embodiment, the second cover member 221 may protect components (e.g., the first circuit board 248 and the rear cover 223) located in the second housing 202 from external impact.

According to an embodiment, the rear cover 223 may protect components (e.g., the first circuit board 248) located on the second cover member 221. For example, the rear cover 223 may be connected to the second cover member 221 and formed to surround at least a portion of the first circuit board 248. According to an embodiment, the rear cover 223 may include an antenna pattern (e.g., at least one antenna element 223a) to communicate with an external electronic device. For example, when the rear cover 223 is formed as an injection molded product (e.g., an antenna carrier) of a dielectric material, the at least one antenna element 223a may be disposed on an outer surface (e.g., one surface facing the -Z axis direction) of the rear cover 223. For example, the at least one antenna element 223a may include a laser direct structuring (LDS) antenna pattern formed on the outer surface of the rear cover 223. For example, the at least one antenna element 223a may be formed to be embedded during injection of the rear cover 223. For example, the at least one antenna element 223a may be configured to transmit or receive a wireless signal in a specified frequency band (e.g., a legacy band) by being electrically connected to a wireless communication circuit (e.g., the wireless communication module 192 in FIG. 1) disposed on the first circuit board 248.

According to an embodiment, the second rear plate 225 may substantially form at least a portion of the exterior of the second housing 202 or the electronic device 101. For example, the second rear plate 225 may be coupled to an outer surface of the second cover member 221. According to an embodiment, the second rear plate 225 may provide a decorative effect on the exterior of the electronic device 101. The second rear plate 225 may be manufactured using at least one of metal, glass, synthetic resin, or ceramic.

According to embodiments, the display assembly 230 may include a display 231 (e.g., the display 231 in FIG. 2 and/or FIG. 3) and a multi-bar structure 232 supporting the display 231. According to an embodiment, the display 231 may be referred to as a flexible display, a foldable display, and/or a rollable display. According to an embodiment, the first display area A1 of the display 231 may be supported by a rigid body, and the second display area A2 may be supported by a bendable structure. For example, the first display area A1 may be supported by the first surface F1 of the second cover member 221 or a plate which is not shown. The second display area A2 may be supported by the multi-bar structure 232.

According to an embodiment, the multi-bar structure 232 may be connected or attached to at least a portion (e.g., the second display area A2) of the display 231. According to an embodiment, as the second housing 202 slides, the multi-bar structure 232 may move relative to the first housing 201. In the slide-in state (e.g., FIG. 2), most of the multi-bar structure 232 may be accommodated within the first housing 201 and located between the first cover member 211 and the second cover member 221. According to an embodiment, at least a portion of the multi-bar structure 232 may move in correspondence with the curved surface 213a located at an edge of the frame 213. According to an embodiment, the multi-bar structure 232 may be referred to as a display support member or a support structure, and have one elastic plate shape.

According to an embodiment, the driving structure 240 may move the second housing 202 relative to the first housing 201. For example, the driving structure 240 may include a motor 241 configured to generate a driving force for sliding the second housing 202 relative to the first housing. The driving structure 240 may include a gear 244 (e.g., a pinion) connected to the motor 241 and a rack 242 configured to mesh with the gear. Referring to FIG. 4, components (e.g., the motor 241, the rack 242, and the gear 244) of the driving structure 240 which is inverted (e.g., facing in the -Z-axis direction) are shown in a circle P1.

According to an embodiment, a housing in which the rack 242 is located may be different from a housing in which the motor 241 is located. According to an embodiment, the motor 241 may be connected to the first housing 201, and the rack 242 may be connected to the second housing 202. According to an embodiment, the motor 241 may be connected to the second housing 202, and the rack 242 may be connected to the first housing 201.

According to an embodiment, the motor 241 may be controlled by a processor (e.g., the processor 120 of FIG. 1). For example, the processor 120 may include a motor driver driving circuit and transmit a pulse width modulation (PWM) signal to the motor 241 to control the speed of the motor 241 and/or the torque of the motor 241. According to an embodiment, the motor 241 may be electrically connected to the processor (e.g., the processor 120 of FIG. 1) located on a circuit board (e.g., the first circuit board 248 of FIG. 4) using a flexible printed circuit board.

According to an embodiment, the second housing 202 may accommodate the first circuit board 248 (e.g., the main board). According to an embodiment, a processor, memory, and/or an interface may be mounted on the first circuit board 248. The processor may include, for example, one or more of a CPU, an AP, a GPU, an ISP, a sensor hub processor, or a CP. According to various embodiments, the first circuit board 248 may include a flexible printed circuit board type radio frequency cable (FRC). The first circuit board 248 may be disposed on at least a portion of the second cover member 221 and electrically connected to an antenna module (e.g., the antenna module 197 of FIG. 1) and a communication module (e.g., the communication module 190 of FIG. 1).

According to an embodiment, the memory may include, for example, volatile memory or non-volatile memory.

According to an embodiment, the interface may include, for example, an HDMI, a USB interface, an SD card interface, and/or an audio interface. For example, the interface may electrically or physically connect the electronic device 101 to an external electronic device and include a USB connector, an SD card/MMC connector, or an audio connector.

According to an embodiment, the electronic device 101 may include the second circuit board 245 (e.g., sub-circuit board) within the first housing 201, spaced apart from the first circuit board 248 (e.g., the main circuit board). The second circuit board 245 may be electrically connected to the first circuit board 248 through a connecting flexible board. The second circuit board 245 may be electrically connected to electrical components disposed in an end area of the electronic device 101, such as the battery 289 or a speaker and/or a SIM socket, to transmit signals and power. According to an embodiment, the second circuit board 249 may accommodate an antenna member 271 (e.g., a coil) or may be connected to the antenna member 271. The antenna member 271 may include a wireless charging antenna for performing a wireless charging function, a near field communication (NFC) antenna for performing an NFC function, and/or a magnetic secure transmission (MST) antenna for performing an electronic payment function. For example, the battery 289 may receive power from an external electronic device using the antenna member 271 for wireless charging. In another example, the battery 289 may transfer power to an external electronic device the antenna member 271 for wireless charging.

According to an embodiment, the battery 289, which is a device for supplying power to at least one component of the electronic device 101, may be a non-rechargeable primary battery, a rechargeable secondary battery, or a fuel cell. The battery 289 may be disposed integrally within the electronic device 101 or detachably from the electronic device 101. According to an embodiment, the battery 289 may be formed as a single integrated battery or include a plurality of separate batteries. According to an embodiment, the battery 289 may be located on the frame 213. For example, the battery 289 may be surrounded by the frame 213 and the battery cover 289a. According to an embodiment, the battery 289 may be located within the second housing 202 and slide together with the second housing 202.

According to an embodiment, the guide rail 250 may guide movement of the multi-bar structure 232. For example, the multi-bar structure 232 may slide along a slit 251 formed on the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed on an inner side surface of the guide rail 250. Referring to FIG. 4, the guide rail 250 is shown as enlarged in a circle P2.

According to an embodiment, the guide rail 250 may provide force to the multi-bar structure 232 based on driving of the motor 241.

According to an embodiment, when the electronic device 101 changes from the slide-in state to the slide-out state, at least a portion of the second housing 202 may slide to be exposed to the outside from the first housing 201 by driving the motor 241. For example, the gear 244 may rotate in a first rotation direction based on the driving of the motor 241. Since the rack 242 is fixed on the second cover member 221 of the second housing 202, the second housing 202 may slide to be exposed to the outside of the first housing 201 based on sliding movement of the rack 242 in a slide-out direction.

According to an embodiment, when the electronic device 101 changes from the slide-in state to the slide-out state, an inner portion 252 of the guide rail 250 may provide force to the multi-bar structure 232. The multi-bar structure 232 provided with the force may move along the slit 251 of the guide rail 250, and the second housing 202 may slide to extend relative to the first housing 201. At least a portion of the display assembly 230 accommodated between the first cover member 211 and the frame 213 may extend toward the front surface.

According to an embodiment, when the electronic device 101 changes from the slide-out state to the slide-in state, at least a portion of the second housing 202 may slide to be inserted into the first housing 201 through the driving of the motor 241. For example, the gear 244 may rotate in a second rotation direction opposite to the first rotation direction based on the driving of the motor 241. As the rack 242 is fixed on the second cover member 221 of the second housing 202, the second housing 202 may slide to enter the inside of the first housing 201 based on sliding movement of the rack 242 in a slide-in direction.

According to an embodiment, when the electronic device 101 changes from the slide-out state to the slide-in state, an outer portion 253 of the guide rail 250 may provide force to the bent multi-bar structure 232. The multi-bar structure 232 provided with the force may move along the slit 251 of the guide rail 250, and at least a portion of the second housing 202 may slide to be accommodated in the first housing 201. At least a portion of the display assembly 230 may be accommodated between the first cover member 211 and the frame 213.

According to an embodiment, the electronic device 101 may be configured to stop in a specified intermediate state between the slide-in state and the slide-out state by controlling the driving of the motor 241 (free stop function). According to an embodiment, the electronic device 101 may change to the slide-in state, the intermediate state, or the slide-out state through a user's manipulation in a state where no driving force is provided to the motor 241.

Referring to FIG. 5A, in the slide-in state of the electronic device 101, at least a portion of the second housing 202 may be disposed to be accommodated in the first housing 201. As the second housing 202 is disposed to be accommodated in the first housing 201, the overall volume of the electronic device 101 may be reduced. According to an embodiment, when the second housing 202 is accommodated in the first housing 201, the size of the visually exposed display 231 may be minimized. For example, when the second housing 202 is fully accommodated in the first housing 201, the first display area A1 of the display 231 may be visually exposed, and at least a portion (e.g., a portion facing the -Z axis) of the second display area A2 may be located between the battery 289 and the first rear plate 215.

Referring to FIG. 5B, when the electronic device 101 is in the slide-out state, at least a portion of the second housing 202 may protrude from the first housing 201. As the second housing 202 protrudes from the first housing 201, the overall volume of the electronic device 101 may increase. According to an embodiment, when the second housing 202 protrudes from the first housing 201, at least a portion of the second display area A2 of the display 231 may be visually exposed to the outside of the electronic device 101, together with the first display area A1.

FIG. 6 is an exploded perspective view illustrating an electronic device according to an embodiment of the disclosure. For example, FIG. 6 is a rear exploded perspective view illustrating the electronic device 101 according to an embodiment of the disclosure.

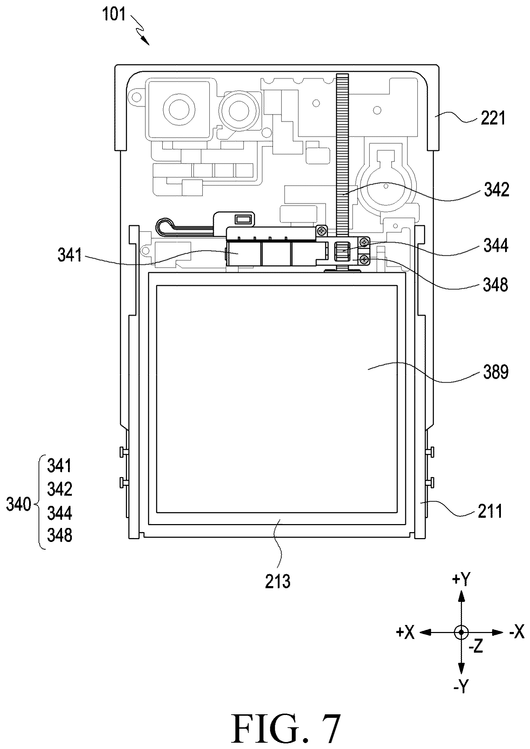

The embodiment of FIG. 6 may be partially combined with the embodiments of FIGS. 1 to 5 or the embodiments of FIGS. 7 to 27.

Referring to FIG. 6, the electronic device 101 (e.g., the electronic device 101 of FIGS. 1 to 5) may include the first housing 201, the second housing 202, the display assembly 230, the guide rail 250, the driving structure 340, a rack guide 350, or an adhesive member 360. The configuration of the first housing 201, the second housing 202, the display assembly 230, the guide rail 250, or the driving structure 340 in FIG. 6 may be partially or wholly the same as the configuration of the first housing 201, the second housing 202, the display assembly 230, the guide rail 250, or the driving structure 240 in FIG. 4.

According to an embodiment, the electronic device 101 may include a circuit board 380. The circuit board 380 may accommodate components (e.g., the processor 120 and/or the sensing circuit in FIG. 1) of the electronic device 101. In an embodiment, the circuit board 380 may be located within the second housing 202. For example, the circuit board 380 may be disposed on the second cover member 221.

In an embodiment, the first housing 201 may include the first cover member 211 (e.g., the first cover member 211 of FIG. 4), the frame 213 (e.g., the frame 213 of FIG. 4), or the first rear plate 213 (e.g., the first rear plate 213 of FIG. 4).

According to an embodiment, the frame 213 may accommodate at least one battery 389a and 389b (e.g., the battery 289 of FIG. 4). For example, the at least one battery 389a and 389b may include a first battery 389a and a second battery 389b.

According to an embodiment, the second housing 202 may include the second cover member 221 (e.g., the second cover member 221 of FIG. 4), the rear cover 223 (e.g., the rear cover 223 of FIG. 4), or the second rear plate 225 (e.g., the second rear plate 225 of FIG. 4).

According to an embodiment, the electronic device 101 may further include an LDS antenna 224 disposed on an outer surface (e.g., a surface facing the -Z direction in FIG. 6) of the rear cover 223. The LDS antenna 224 may be covered by the second rear plate 225.

According to an embodiment, the driving structure 340 may include a motor 341 (e.g., the motor 241 of FIG. 4) or a rack gear 342 (e.g., the rack 242 of FIG. 4).

According to an embodiment, the motor 341 may be disposed in the second housing 202. For example, the motor 341 may be disposed on the second cover member 221 or coupled to at least a portion of the second cover member 221. In an embodiment, the rack gear 342 may be disposed in the first housing 201. For example, the rack gear 342 may be disposed on the frame 211 or coupled to at least a portion of the frame 211. According to an embodiment, the motor 341 may be disposed in the first housing 201, and the rack gear 342 may be disposed in the second housing 202. The motor 341 may also be referred to as a motor driver 341.

According to an embodiment, one end (e.g., an end facing in the -Y direction in FIG. 6) of the rack gear 342 may be coupled to at least a portion (e.g., a portion facing in the +Y direction in FIG. 6) of the frame 213.

According to an embodiment, at least a portion of the rack gear 342 may overlap the at least one battery 389a and 389b in a first direction (e.g., the Y-axis direction in FIG. 6) which is a sliding movement direction of the second housing 202. For example, at least a portion of the rack gear 342 may overlap the at least one battery 389a and 389b with at least a portion of the frame 213 interposed therebetween.

According to an embodiment, the rack guide 350 may be disposed in the second housing 202. For example, the rack guide 350 may be disposed on the second cover member 221 or coupled to the second cover member 221. According to an embodiment, the rack guide 350 may surround at least a portion of the rack gear 342.

According to an embodiment, the rack guide 350 may protect the rack gear 342 from external impact. Further, the rack guide 350 may prevent or limit deformation of the rack gear 342 by surrounding at least a portion of the rack gear 342. According to an embodiment, since the deformation of the rack gear 342 is prevented by the rack guide 350, damage to other electrical components may be prevented.

According to an embodiment, the rack guide 350 may be coupled to the second frame (e.g., the second cover member 221). Further, the rack guide 350 may be configured to slide relative to the rack gear 342.

According to an embodiment, when the second housing 202 slides relative to the first housing 201, the rack guide 350 may slide together with the second housing 202. According to an embodiment, the rack guide 350 may be slide relative to the rack gear 342.

According to an embodiment, the adhesive member 360 may adhere the rack guide 350 to the second cover member 221. The adhesive member 360 may include, but is not limited to, a tape or a bond, and may include various means for adhering the rack guide 350 to the second cover member 221.

FIG. 7 is a plan view illustrating an electronic device according to an embodiment of the disclosure.

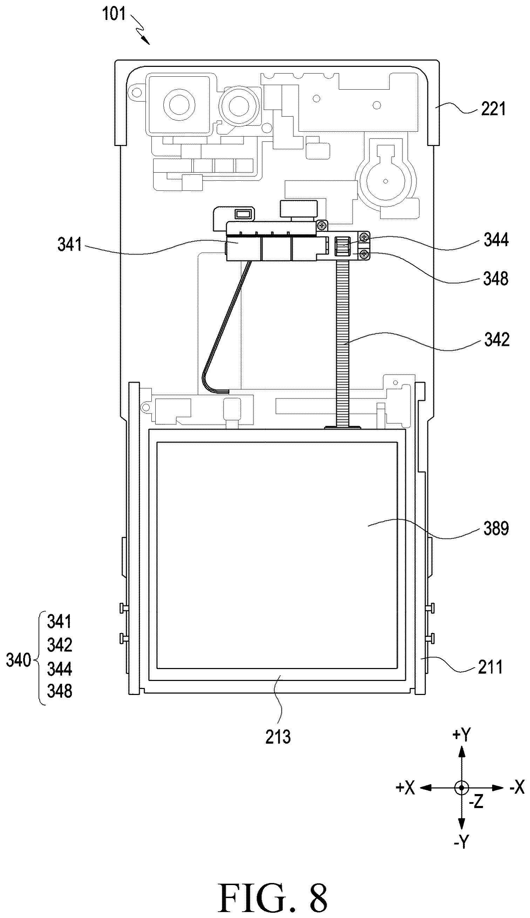

FIG. 8 is a plan view illustrating an electronic device according to an embodiment of the disclosure.

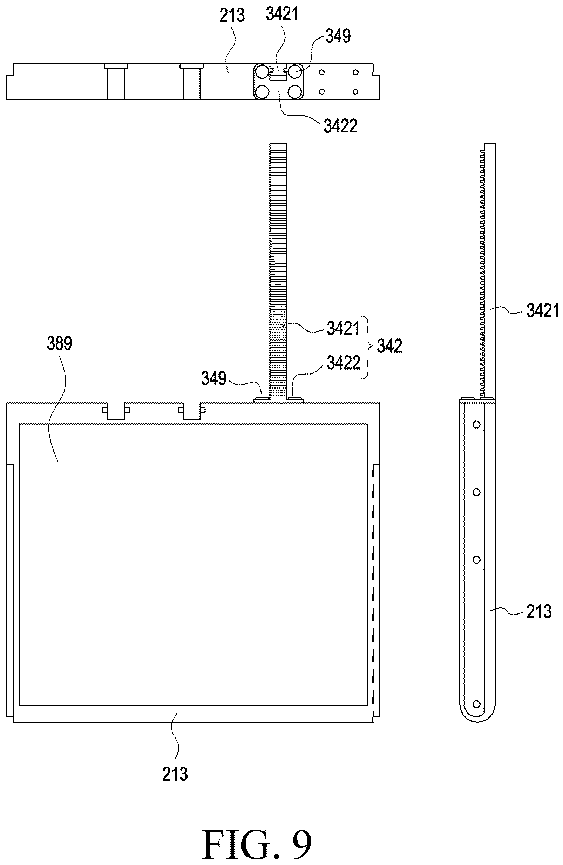

FIG. 9 is a diagram illustrating a frame and a rack gear according to an embodiment of the disclosure.

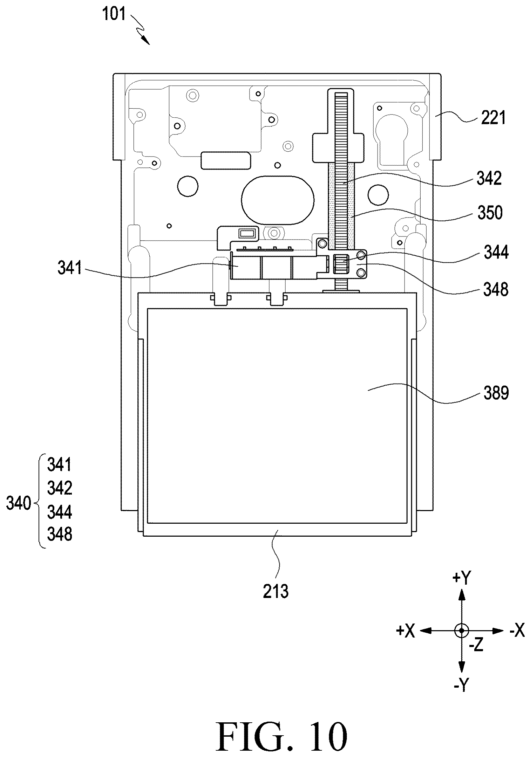

The embodiments of FIGS. 7 to 9 may be partially combined with the embodiments of FIGS. 1 to 6 or the embodiments of FIGS. 10 to 27.

Referring to FIGS. 7 to 9, the electronic device 101 (e.g., the electronic device 101 of FIGS. 1 to 6) may include the first cover member 211, the frame 213, the second cover member 221, the driving structure 340, the motor 341, the rack gear 342, a pinion gear 344, a gear frame 348, or a battery 389.

The configuration of the first cover member 211, the frame 213, the second cover member 221, the driving structure 340, the motor 341, the rack gear 342, or the battery 389 in FIGS. 7 to 9 may include the first cover member 211, the frame 213, the second cover member 221, the driving structure 340, the motor 341, the rack gear 342, or the at least one battery 389a and 389b in FIG. 6.

According to an embodiment, the driving structure 340 may include the motor 341, the rack gear 342, the pinion gear 344, or the gear frame 348.

According to an embodiment, the pinion gear 344 may be disposed at one end of a rotation shaft of the motor 341. The pinion gear 344 may be configured to mesh with the rack gear 342.

According to an embodiment, the gear frame 348 may be coupled to the second cover member 221. For example, the gear frame 348 may be coupled to the second cover member 221 through a fastening member such as a bolt.

According to an embodiment, the gear frame 348 may have a box shape with an internal space formed therein and one side open. According to an embodiment, the gear frame 348 may accommodate at least a portion of the motor 341, the pinion gear 344, or the rack gear 342. For example, at least a portion of the motor 341 may be fixed to the gear frame 348. According to an embodiment, the gear frame 348 may rotatably support the rotation shaft of the motor 341.

According to an embodiment, the gear frame 348 may accommodate at least a portion of the rack gear 342. For example, at least a portion of the rack gear 342 may be accommodated inside the gear frame 348. In addition, at least a portion of the rack gear 342 may be slide relative to the gear frame 246, while accommodated in the gear frame 348. For example, when the pinion gear 344 connected to the motor 341 rotates, the rack gear 342 may slide in the first direction (e.g., the Y-axis direction in FIG. 7).

According to an embodiment (see FIG. 9), the rack gear 342 may include a gear portion 3421 or a first coupling portion 3422.

According to an embodiment, the gear portion 3421 may extend in the longitudinal direction (e.g., the Y-axis direction in FIGS. 7 to 8) of the electronic device 101. Further, the gear portion 3421 may be configured to mesh with the pinion gear 344. For example, the gear portion 3421 may include gear teeth configured to mesh with the pinion gear 344.

According to an embodiment, the first coupling portion 3422 may be disposed at one end of the gear portion 3421. According to an embodiment, the first coupling portion 3422 and the gear portion 3421 may be formed integrally or formed as separate members and assembled.

According to an embodiment, the first coupling portion 3422 may be coupled or fixed to the frame 213 through a coupling member 349 (e.g., a bolt or a pin).

According to an embodiment, the pinion gear 344 of the motor 341 may rotate on the rack gear 342, so that the rack gear 342 may slide relative to the motor 341.

According to an embodiment, the pinion gear 344 may rotate in a first rotation direction or a second rotation direction opposite to the first rotation direction through the rotation of the motor 341.

According to an embodiment, as the rack gear 342 is fixed to the frame 213, the rack gear 342 may slide relative to the motor 341 by the rotation of the pinion gear 344.

According to an embodiment, the frame 213 may include an aluminum material, and the rack gear 342 may include a stainless steel material having higher rigidity than the aluminum material of the frame 213, to which the disclosure is not limited.

According to an embodiment, as the pinion gear 344 rotates in the first rotation direction, the motor 341 may slide in a direction relatively away from the battery 389 (or in the slide-out direction of the second housing) (e.g., in the +Y direction in FIGS. 7 to 8). Accordingly, the second cover member 221 coupled to the motor 341 and the gear frame 344 may slide relative to the frame 213, thereby providing the slide-out state (e.g., FIG. 3, FIG. 5B, or FIG. 8) of the electronic device 101.

According to an embodiment, as the pinion gear 344 rotates in the second rotation direction opposite to the first rotation direction, the motor 341 may slide in a direction relatively approaching the battery 389 (or the slide-in direction of the second housing) (e.g., the -Y direction in FIGS. 7 to 8). Accordingly, the second cover member 221 coupled to the motor 341 and the gear frame 344 may slide relative to the frame 213. Accordingly, the second cover member 221 coupled to the motor 341 and the gear frame 344 may slide relative to the frame 213, thereby providing the slide-in state (e.g., FIG. 2, FIG. 5A, or FIG. 7) of the electronic device 101.

FIG. 10 is a plan view illustrating an electronic device in a slide-in state according to an embodiment of the disclosure.

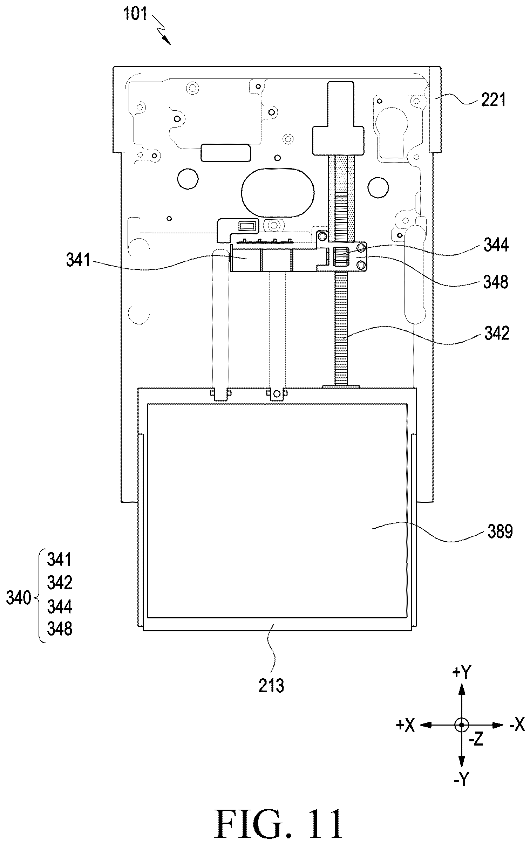

FIG. 11 is a plan view illustrating an electronic device in an intermediate state according to an embodiment of the disclosure.

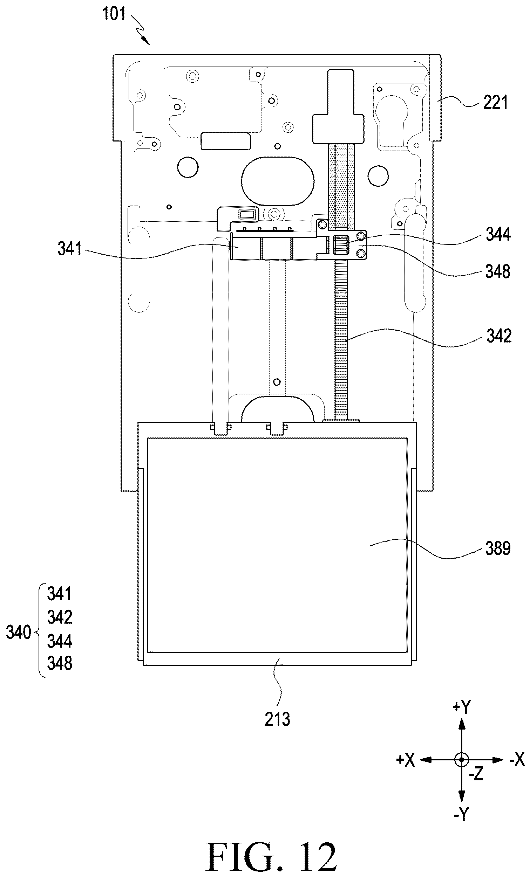

FIG. 12 is a plan view illustrating an electronic device in a slide-out state according to an embodiment of the disclosure.

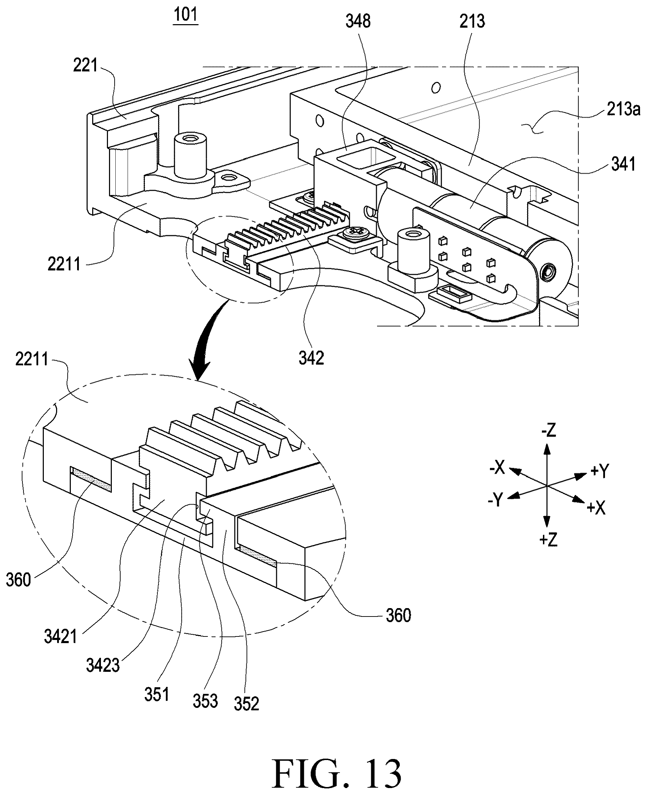

The embodiments of FIGS. 10 to 12 may be partially combined with the embodiments of FIGS. 1 to 9 or the embodiments of FIGS. 13 to 27.

Referring to FIGS. 10 to 12, the electronic device 101 (e.g., the electronic device 101 of FIGS. 1 to 9) may include the frame 213, the second cover member 221, the driving structure 340, the motor 341, the rack gear 342, the pinion gear 344, the gear frame 348, the rack guide 350, or the battery 389.

The configuration of the frame 213, the second cover member 221, the driving structure 340, the motor 341, the rack gear 342, the pinion gear 344, the gear frame 348, or the battery 389 in FIGS. 10 to 12 may be partially or wholly the same as the configuration of the frame 213, the second cover member 221, the driving structure 340, the motor 341, the rack gear 342, the pinion gear 344, the gear frame 348, or the battery 389 in FIGS. 7 to 8. The configuration of the rack guide 350 in FIGS. 10 to 12 may be partially or wholly the same as the configuration of the rack guide 350 in FIG. 6.

According to an embodiment, as the pinion gear 344 rotates on the rack gear 344, the second housing (e.g., the second cover member 221) coupled to the motor 341 and the gear frame 348 may slide relative to the first housing (e.g., the frame 213).

According to an embodiment, in the slide-in state of the electronic device 101 (e.g., FIG. 2 or FIG. 10), the second cover member 221 may slide in the slide-out direction (e.g., the +Y direction in FIGS. 10 to 12) relative to the frame 213. Accordingly, the slide-out state of the electronic device 101 (e.g., FIG. 3 or FIG. 12) in which the second display area (e.g., the second display area A2 of FIG. 4) is visually exposed to the outside of the electronic device 101 may be provided.

According to an embodiment, in the slide-out state of the electronic device 101 (e.g., FIG. 3 or FIG. 12), the second cover member 221 may slide in the slide-in direction (e.g., the -Y direction of FIGS. 10 to 12) relative to the frame 213. Accordingly, the slide-in state (e.g., FIG. 2 or FIG. 10) in which the second display area (e.g., the second display area A2 of FIG. 4) is accommodated inside the first housing may be provided.

According to an embodiment, the electronic device 101 may provide the intermediate state (e.g., FIG. 11) between the slide-in state and the slide-out state. For example, the size of an area of the display (e.g., the display 231 of FIG. 4) that is visually exposed to the user may be larger in the intermediate state (e.g., FIG. 11) of the electronic device 101 than the size of an area of the display that is visually exposed to the user in the slide-in state (e.g., FIG. 2 or FIG. 10). In addition, the size of the area of the display (e.g., the display 231 of FIG. 4) that is visually exposed to the user may be smaller in the intermediate state (e.g., FIG. 11) of the electronic device 101 than the size of an area of the display that is visually exposed to the user in the slide-out state (e.g., FIG. 3 or FIG. 12).

According to an embodiment, the rack guide 350 may be disposed on the second cover member 221. According to an embodiment, the rack guide 350 may be coupled to at least a portion of the second cover member 221. For example, the rack guide 350 may be coupled to an opening formed through at least a portion of the second cover member 221. According to an embodiment, the rack guide 350 may be coupled to one surface (e.g., a surface facing the -Z direction in FIGS. 10 to 12) of the second cover member 221, or may be coupled to a groove recessed on the one surface of the second cover member 221.

According to an embodiment, the rack guide 350 may surround at least a portion of the rack gear 342. For example, the rack guide 350 may extend along the longitudinal direction (e.g., the Y-axis direction in FIGS. 10 to 12) of the rack gear 342. Additionally, the rack guide 350 may surround at least a portion of the rack gear 342 continuously in the longitudinal direction of the rack gear 342.

According to an embodiment, when the second cover member 221 slides relative to the frame 213, the rack guide 350 may slide relative to the rack gear 342. According to an embodiment, it may be defined that the rack gear 342 slides relative to the rack guide 350.

According to an embodiment, the rack guide 350 may protect the rack gear 342 from external impact. For example, when external impact is applied to the electronic device 101, the rack guide 350 may alleviate the external impact applied (or transmitted) to the rack gear 342.

According to an embodiment, the rack guide 350 may limit or prevent deformation of the rack gear 342 by covering at least a portion of the rack gear 342 along the longitudinal direction (e.g., the Y-axis direction in FIGS. 10 to 12) of the rack gear 342. For example, the rack gear 342 may be covered by the rack guide 350, thereby limiting or preventing bending of at least a portion of the rack gear 342. Accordingly, deformation of the rack gear 342 does not occur, thereby preventing other components from being damaged by the rack gear 342. According to an embodiment, when the rack gear 342 is damaged, the rack guide 350 may block fragments of the rack gear 342 from being transmitted to other components.

According to an embodiment, the rack guide 350 may include, not limited to, a polyoxymethylene (POM) material or an acetal material, and may include or be formed of various materials.

FIG. 13 is a cross-sectional perspective view illustrating an electronic device according to an embodiment of the disclosure.

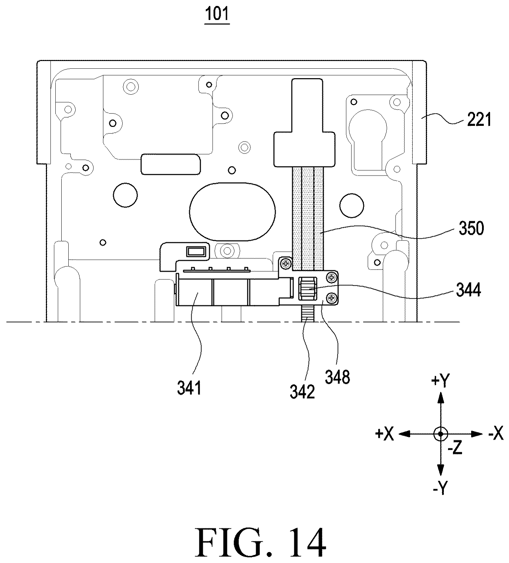

FIG. 14 is a plan view illustrating an electronic device according to an embodiment of the disclosure.

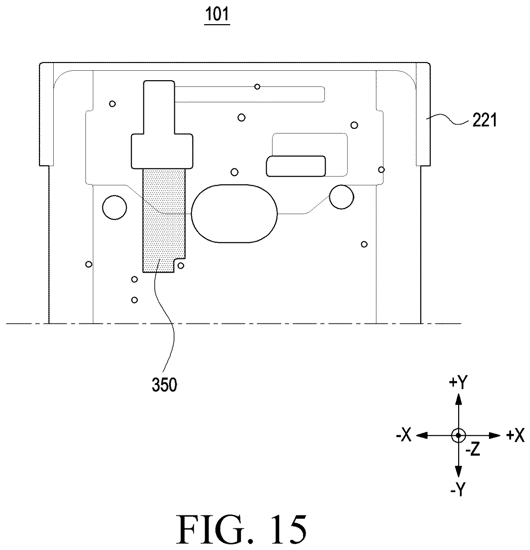

FIG. 15 is a plan view illustrating an electronic device viewed from an opposite direction to FIG. 14 according to an embodiment of the disclosure.

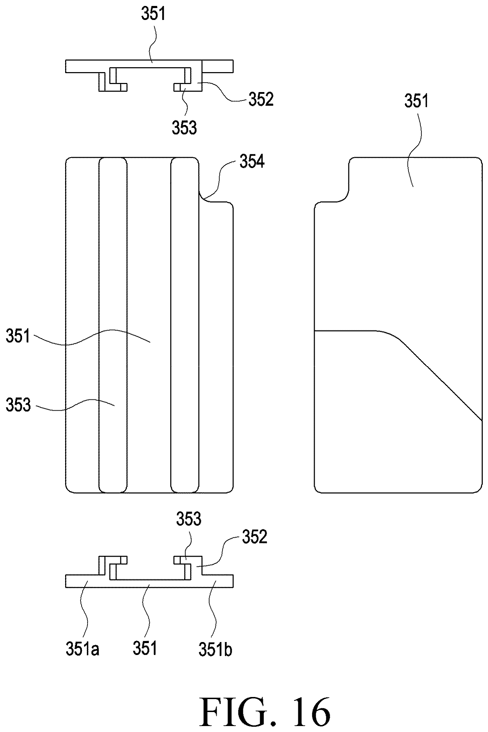

FIG. 16 is a diagram illustrating a rack guide according to an embodiment of the disclosure.

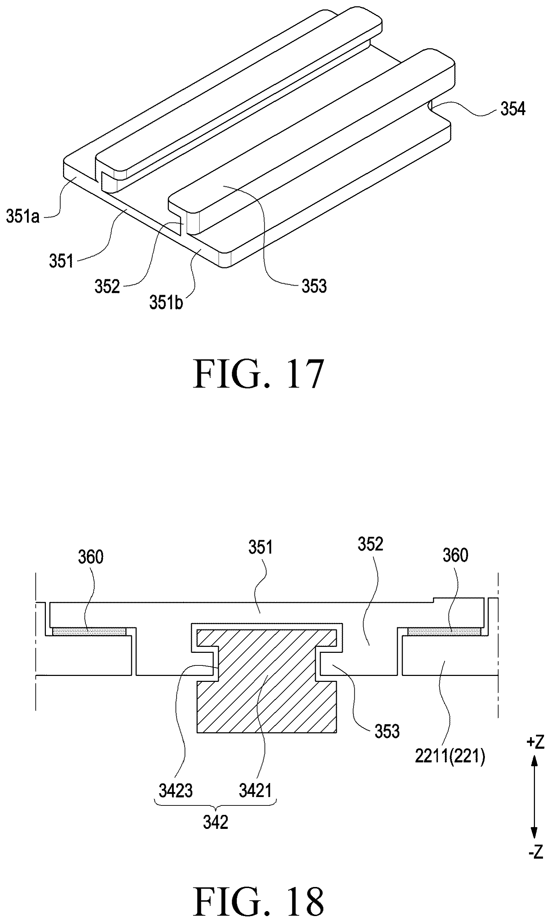

FIG. 17 is a perspective view illustrating a rack guide according to an embodiment of the disclosure.

FIG. 18 is a cross-sectional view illustrating a rack gear and a rack guide according to an embodiment of the disclosure.

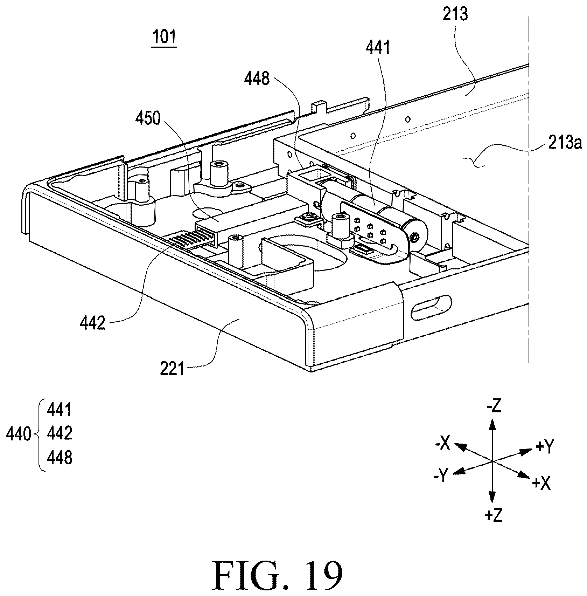

The embodiments of FIGS. 13 to 18 may be partially combined with the embodiments of FIGS. 1 to 12 or the embodiments of FIGS. 19 to 27.

Referring to FIGS. 13 to 18, the electronic device 101 (e.g., the electronic device 101 of FIGS. 1 to 12) may include a frame 213, the second cover member 221, the motor 341, the rack gear 342, the gear frame 348, the rack guide 350, or the adhesive member 360.

The configuration of the frame 213, the second cover member 221, the motor 341, the rack gear 342, the gear frame 348, or the rack guide 350 in FIGS. 13 to 18 may be partially or wholly the same as the configuration of the frame 213, the second cover member 221, the motor 341, the rack gear 342, the gear frame 348, or the rack guide 350 in FIG. 6 or FIGS. 9 to 12. The configuration of the adhesive member 360 in FIGS. 13 to 18 may be partially or wholly the same as the configuration of the adhesive member 360 in FIG. 6.

According to an embodiment, the frame 213 may include an accommodation space 213a in which the battery (e.g., the battery 389 of FIGS. 10 to 12) may be accommodated. The accommodation space 213a may be defined as a recess sunken into at least a portion of the frame 213.

According to an embodiment, the rack guide 350 may be disposed in an opening or hole formed in a flat portion 2211 of the second cover member 221. For example, the rack guide 350 may be disposed on or coupled to at least a portion of the flat portion 2211 surrounding or defining the opening or hole.

According to an embodiment, at least a portion of the flat portion 2211 may be formed to be stepped. According to an embodiment, at least a portion of the rack guide 350 may be stacked on a stepped portion of the flat portion 2211.

According to an embodiment, the rack gear 342 may include a gear portion 3421 and a gear groove 3423 recessed on a side surface of the gear portion 3421. According to an embodiment, the gear groove 3423 may extend along the longitudinal direction (e.g., the Y-axis direction in FIG. 13) of the gear portion 3421.

According to an embodiment, the rack guide 350 may include a first portion 351, a second portion 352, or a third portion 353.

According to an embodiment, the first portion 351 may be a portion stacked on at least a portion of the flat portion 2211 of the second cover member 221. According to an embodiment, the first portion 351 may have, but is not limited to, a flat shape.

According to an embodiment, the second portion 352 may be a portion protruding from one surface (e.g., a surface facing the -Z direction in FIG. 13) of the first portion 351 or a portion connected to the one surface (e.g., the surface facing the -Z direction in FIG. 13) of the first portion 351.

According to an embodiment, a pair of second portions 352 spaced apart from each other may be provided, to which the disclosure is not limited. The pair of second portions 352 may be disposed to face the side surfaces of the gear portion 3421 or cover the side surfaces of the gear portion 3421.

According to an embodiment, the third portion 353 may be a portion protruding or extending from one end (e.g., an end facing the -Z direction in FIG. 13) of the second portion 352 toward a side surface of the gear portion 3421.

According to an embodiment, a pair of third portions 353 disposed on the pair of second portions 352 may be provided, to which the disclosure is not limited. According to an embodiment, at least a portion of the third portion 353 may be disposed or accommodated in the gear groove 3423 of the rack gear 342.

According to an embodiment, as the third portion 353 is disposed in the gear groove 3423, the rack gear 342 may be restricted from being separated from the rack guide 350.

According to an embodiment, the adhesive member 360 may adhere the rack guide 350 to the second cover member 221. For example, the adhesive member 360 may adhere the first portion 351 of the rack guide 350 to the flat portion 2211 of the second cover member 221.

According to an embodiment, the first portion 351 may include a pair of wing portions (e.g., a pair of wing portions 351a and 351b of FIGS. 16 and 17) stacked on the flat portion 2211 of the second cover member 221.

According to an embodiment, the pair of wing portions 351a and 351b may be stacked on the flat portion 2211 of the second cover member 221 by the adhesive member 360.

Referring to FIG. 18, at least a portion of the gear portion 3421 of the rack gear 342 may be accommodated in a space surrounded or defined by the first portion 351, the second portion 352, and the third portion 353 of the rack guide 350. According to an embodiment, the space surrounded by the first portion 351, the second portion 352, and the third portion 353 of the rack guide 350 may be defined as a rail structure in which the rack gear 350 may relatively slide.

Referring to FIG. 18, an arbitrary gap may be formed between the gear portion 3421 of the rack gear 342 and the rack guide 350. For example, the arbitrary gap may be formed between the gear portion 342 and the first portion 351, between the gear portion 342 and the second portion 352, or between the gear portion 342 and the third portion 353. Accordingly, when the rack gear 342 slides relative to the rack guide 350, the rack gear 342 and the rack guide 350 may not come into contact, thereby causing no friction.

According to an embodiment, the arbitrary gap may be, but is not limited to, about 0.05mm or more.

According to an embodiment, the rack guide 350 may further include a recessed portion 354 recessed on a corner of the first portion 351. However, the recessed portion 354 may be omitted according to an embodiment. According to an embodiment, at least a portion of the gear frame 348 may be disposed in the recessed portion 354, to which the disclosure is not limited.

According to an embodiment, at least a portion of the rack gear 342 may overlap at least a portion of the battery (e.g., the battery 389 of FIG. 8) with at least a portion of the frame 213 interposed therebetween in the first direction (e.g., the Y-axis direction in FIG. 13), which is the sliding movement direction of the second cover member 221.

According to an embodiment, the rack gear 342 may not overlap the battery in the width direction (e.g., the X-axis direction in FIG. 13) or the thickness direction (e.g., the Z-axis direction in FIG. 13) of the electronic device 101. For example, the size of the frame 213 in the width direction or the thickness direction for accommodating the battery may be sufficiently secured in a limited space, thereby additionally securing the capacity of the battery.

FIG. 19 is a perspective view illustrating an electronic device according to an embodiment of the disclosure.

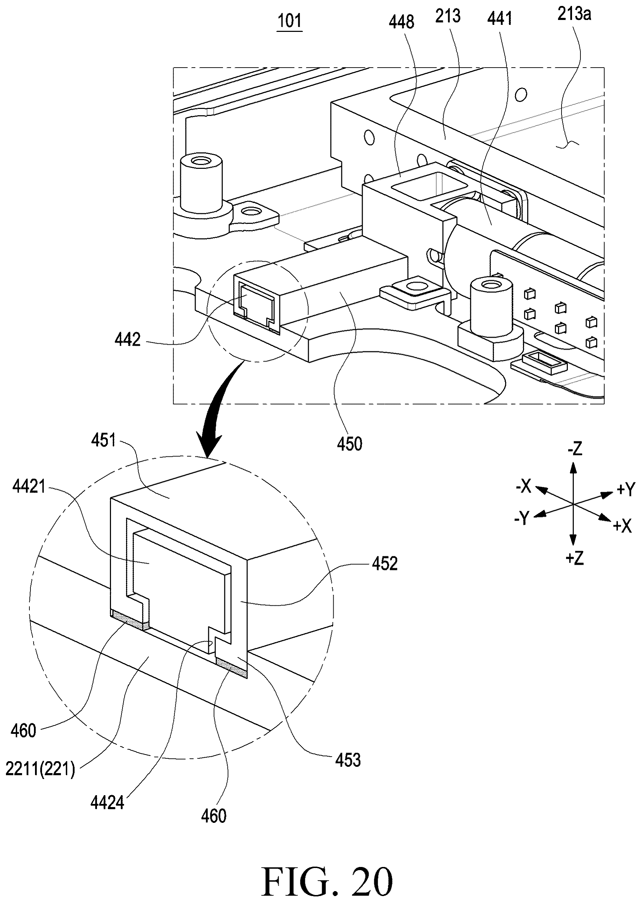

FIG. 20 is a cross-sectional perspective view illustrating an electronic device according to an embodiment of the disclosure.

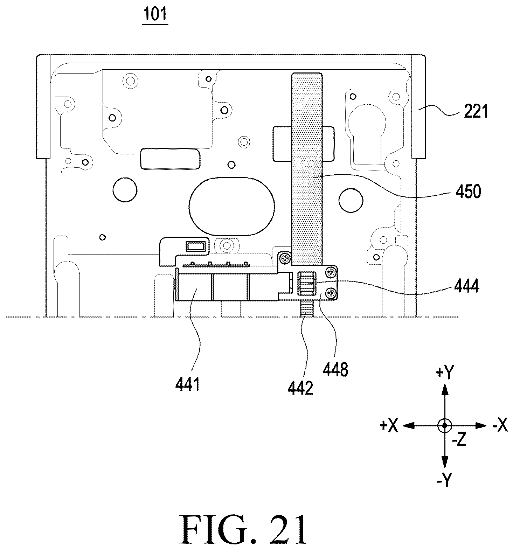

FIG. 21 is a plan view illustrating an electronic device according to an embodiment of the disclosure.

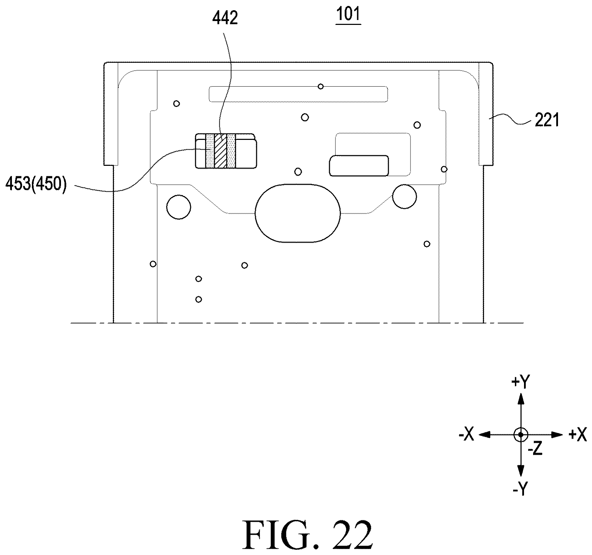

FIG. 22 is a plan view illustrating an electronic device viewed from an opposite direction to FIG. 21 according to an embodiment of the disclosure.

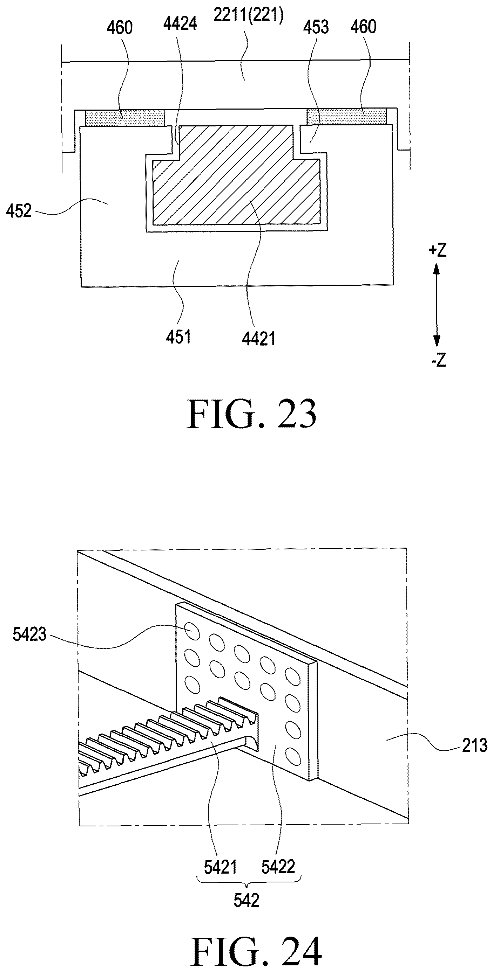

FIG. 23 is a cross-sectional view illustrating a rack gear and a rack guide according to an embodiment of the disclosure.

The embodiments of FIGS. 19 to 23 may be partially combined with the embodiments of FIGS. 1 to 18 or the embodiments of FIGS. 24 to 27.

Referring to FIGS. 19 to 23, the electronic device 101 (e.g., the electronic device 101 of FIGS. 1 to 18) may include the frame 213, the second cover member 221, a driving structure 440, a motor 441, a rack gear 442, a gear frame 448, a rack guide 450, or an adhesive member 460.

The configuration of the frame 213, the second cover member 221, the driving structure 440, the motor 441, the rack gear 442, the gear frame 448, the rack guide 450, or the adhesive member 460 in FIGS. 19 to 23 may be partially or entirely the same as the configuration of the frame 213, the second cover member 221, the driving structure 340, the motor 341, the rack gear 342, the gear frame 348, the rack guide 350, or the adhesive member 360 in FIGS. 6 to 18.

According to an embodiment, the rack guide 450 may be disposed on the second cover member 221. According to an embodiment, the rack guide 450 may be coupled to at least a portion of the second cover member 221. For example, the rack guide 350 may be coupled to a recess formed in at least a portion of the second cover member 221. According to an embodiment, the rack guide 450 may be coupled to one surface (e.g., a surface facing the -Z direction in FIGS. 19 to 20) of the second cover member 221, or may be coupled to a hole formed through the one surface of the second cover member 221.

According to an embodiment, the rack guide 450 may surround at least a portion of the rack gear 442. For example, the rack guide 450 may extend along the longitudinal direction (e.g., the Y-axis direction in FIGS. 19 to 20) of the rack gear 442. In addition, the rack guide 450 may surround at least a portion of the rack gear 342 continuously in the longitudinal direction of the rack gear 442.

According to an embodiment, when the second cover member 221 slides relative to the frame 213, the rack guide 450 may slide relative to the rack gear 442. According to an embodiment, it may be defined that the rack gear 442 slides relative to the rack guide 450.

According to an embodiment, the rack guide 450 may protect the rack gear 442 from external impact. For example, when external impact is applied to the electronic device 101, the rack guide 450 may alleviate the external impact applied (or transmitted) to the rack gear 442.

According to an embodiment, the rack guide 450 may limit or prevent deformation of the rack gear 442 by covering at least a portion of the rack gear 442 along the longitudinal direction (e.g., the Y-axis direction in FIGS. 19 and 20) of the rack gear 442. For example, the rack gear 442 may be covered by the rack guide 450, thereby restricting or preventing bending of at least a portion of the rack gear 442. Accordingly, deformation of the rack gear 442 does not occur, thereby preventing other components from being damaged by the rack gear 442. According to an embodiment, when the rack gear 442 is damaged, the rack guide 450 may block fragments of the rack gear 442 from being transmitted to other components.

According to an embodiment, the frame 213 may include the accommodation space 213a in which the battery (e.g., the battery 389 of FIGS. 10 to 12) may be accommodated. The accommodation space 213a may be defined as a recess sunken into at least a portion of the frame 213.

According to an embodiment, the rack guide 450 may be disposed in a recess or groove formed in the flat portion 2211 of the second cover member 221. For example, the rack guide 450 may be disposed in or coupled to at least a portion of the flat portion 2211 surrounding or defining the recess or groove.

According to an embodiment, at least a portion of the rack gear 442 and at least a portion of the rack guide 450 may be accommodated in the recess of the flat portion 2211.

According to an embodiment, the rack gear 442 may include a gear portion 4421 and a gear groove 4424 recessed on a corner of the gear portion 4421. According to an embodiment, the gear groove 4423 may extend along the longitudinal direction (e.g., the Y-axis direction in FIG. 13) of the gear portion 4421.

According to an embodiment, the gear portion 4421 may include gear teeth configured to mesh with a pinion gear (e.g., the pinion gear 344 of FIGS. 10 to 12).

According to an embodiment, the rack guide 450 may include a first portion 451, a second portion 452, or a third portion 453.

According to an embodiment, the first portion 451 may be a portion covering the top (e.g., top in the -Z direction of FIGS. 19 and 20) of the gear portion 4421. For example, the first portion 451 may be disposed to cover the gear teeth of the gear portion 4421. According to an embodiment, the first portion 451 may have, but is not limited to, a flat shape.

According to an embodiment, the second portion 452 may be a portion protruding from one surface (e.g., a surface facing the +Z direction in FIGS. 19 and 20) of the first portion 451 or a portion connected to the one surface (e.g., the surface facing the +Z direction in FIG. 20) of the first portion 451.

According to an embodiment, a pair of second portions 452 spaced apart from each other may be provided, to which the disclosure is not limited. The pair of second portions 452 may be disposed to face the side surfaces of the gear portion 4421 or cover the side surfaces of the gear portion 4421.

According to an embodiment, the third portion 453 may be a portion that protrudes or extends from one end (e.g., an end facing the -Z direction in FIG. 13) of the second portion 452 toward a side surface of the gear portion 4421.

According to an embodiment, a pair of third portions 453 disposed on the pair of second portions 452 may be provided, to which the disclosure is not limited. According to an embodiment, at least one portion of the third portion 453 may be disposed in the gear groove 4424 of the rack gear 442.

According to an embodiment, as the third portion 453 is disposed in the gear groove 4424, the rack gear 442 may be restricted from being separated from the rack guide 450.

According to an embodiment, the adhesive member 460 may adhere the rack guide 450 to the second cover member 221. For example, the adhesive member 460 may adhere the third portion 453 of the rack guide 450 to the flat portion 2211 of the second cover member 221. For example, the third portion 453 may be coupled to the second cover member 221 (e.g., the second housing).

Referring to FIG. 23, at least a portion of the gear portion 4421 of the rack gear 442 may be accommodated in a space surrounded or defined by the first portion 451, the second portion 452, and the third portion 453 of the rack guide 450. According to an embodiment, the space surrounded by the first portion 451, the second portion 452, and the third portion 453 of the rack guide 450 may be defined as a rail structure in which the rack gear 450 may relatively slide.

Referring to FIG. 23, an arbitrary gap may be formed between the gear portion 4421 of the rack gear 442 and the rack guide 450. For example, the arbitrary gap may be formed between the gear portion 442 and the first portion 451, between the gear portion 442 and the second portion 452, or between the gear portion 442 and the third portion 453. Accordingly, when the rack gear 442 slides relative to the rack guide 450, the rack gear 442 and the rack guide 450 may not come into contact, thereby causing no friction.

According to an embodiment, the arbitrary gap may be about, but is not limited to, 0.05mm or more.

Referring to FIG. 23, at least a portion of the rack gear 442 may be surrounded by the flat portion 2211 of the second cover member 221 and the rack guide 450. Accordingly, when the rack gear 442 is damaged, fragments of the rack gear 442 may be restricted from being moved out from a closed space defined by the flat portion 2211 and the rack guide 450 to other external components.

According to an embodiment, at least a portion of the rack gear 442 may overlap at least a portion of the battery (e.g., the battery 389 of FIG. 8) with the frame 213 interposed therebetween, in the first direction (e.g., the Y-axis direction in FIG. 20) which is the sliding movement direction of the second cover member 221.

According to an embodiment, the rack gear 442 may not overlap the battery in the width direction (e.g., the X-axis direction in FIG. 20) or the thickness direction (e.g., the Z-axis direction in FIG. 20) of the electronic device 101. For example, the size of the frame 213 in the width direction or the thickness direction for accommodating the battery in a limited space may be sufficiently secured, thereby additionally securing the capacity of the battery.

FIG. 24 is a perspective view illustrating a rack gear and a frame according to an embodiment of the disclosure.

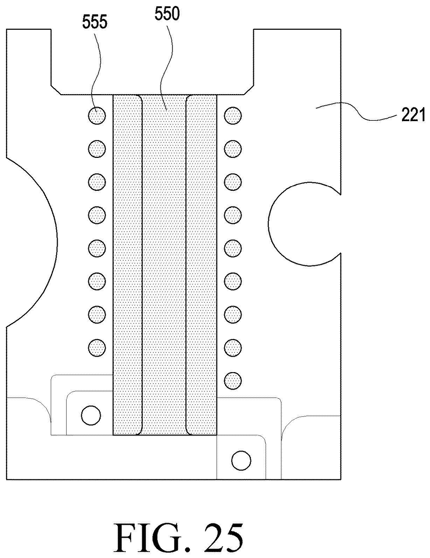

The embodiment of FIG. 24 may be partially combined with the embodiments of FIGS. 1 to 23 or the embodiments of FIGS. 25 to 27.

Referring to FIG. 24, an electronic device (e.g., the electronic device 101 of FIGS. 1 to 23) may include the frame 213 (e.g., the frame 213 of FIGS. 6 to 23) and a rack gear 542 (e.g., the rack gear 342 or 442 of FIGS. 6 to 23).

According to an embodiment, the rack gear 542 may include a gear portion 5421 (e.g., the gear portion 3421 or 4421 of FIGS. 6 to 23) and a first coupling portion 5422 (e.g., the first coupling portion 3422 of FIG. 9).

According to an embodiment, the first coupling portion 5422 may be coupled to the frame 213. According to an embodiment, the first coupling portion 5422 may be welded to at least a portion of the frame 213.

According to an embodiment, since the first coupling portion 5422 and the frame 213 are welded together, compared to a case where the first coupling portion 5422 and the frame 213 are coupled through a fastening member such as a bolt, sufficient coupling force may be secured between the first coupling portion 5422 and the frame 213 while maintaining a small thickness of the frame 213. Accordingly, the electronic device may secure a large space for accommodating the battery in the frame 213 in a limited space, and increase the capacity of the battery.

FIG. 25 is a plan view illustrating a second cover member and a rack guide according to an embodiment of the disclosure.

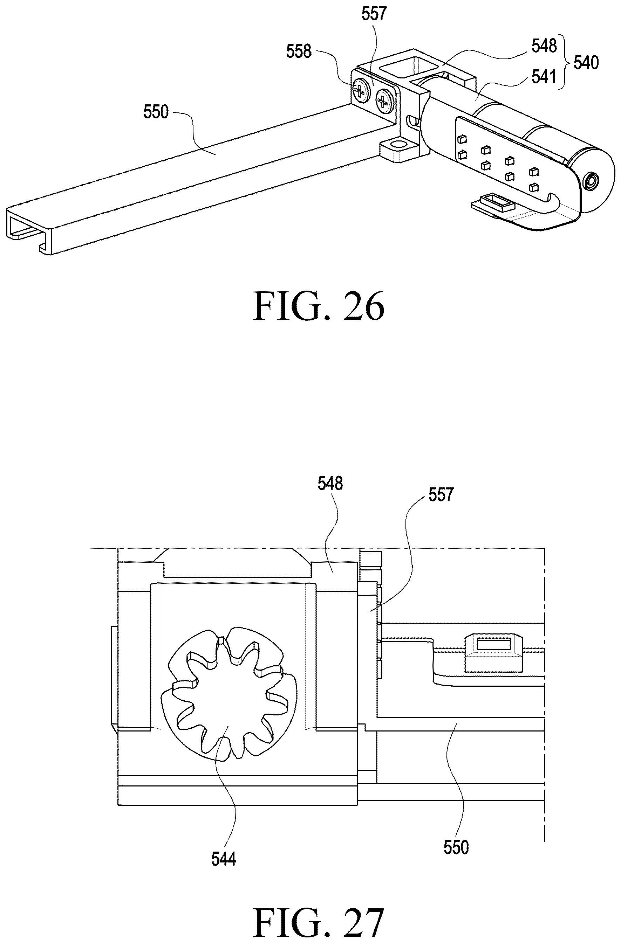

The embodiment of FIG. 25 may be partially or wholly the same as the embodiments of FIGS. 1 to 24 or the embodiments of FIGS. 26 to 27.

Referring to FIG. 25, an electronic device (e.g., the electronic device 101 of FIGS. 1 to 24) may include the second cover member 221 (e.g., the second cover member 221 of FIGS. 6 to 24) or a rack guide 550 (e.g., the rack guide 350 or 450 of FIGS. 6 to 23).

According to an embodiment, the rack guide 550 may be formed by insert injection into the second cover member 221. According to an embodiment, the rack guide 550 may include a plurality of coupling protrusions 555 coupled to a plurality of holes or grooves formed in the second cover member 221.

According to an embodiment, the plurality of coupling protrusions 555 may be portions filled in the holes or grooves of the second cover member 221 during the insert injection of the rack guide 550.

According to an embodiment, since the rack guide 550 is formed on or coupled to the second cover member 221 by insert injection, compared to a case where the rack guide 550 is coupled to the second cover member 221 through a separate adhesive member, the thicknesses of the rack guide 550 and the second cover member 221 (or the thickness of the electronic device) may be secured to be small since no adhesive member is used.

According to an embodiment, the rack guide 550 may be insert-injected in a state where a rail structure for relative sliding movement of a rack gear (e.g., the rack gear 342, 442, or 542 of FIGS. 6 to 24) is not formed. The insert-injected rack guide 550 may additionally be subjected to a cutting process for forming the rail structure for relative sliding movement of the rack gear. However, the disclosure is not limited thereto, and the rail structure may be formed during the insert-injection of the rack guide 550 into the second cover member 221.

FIG. 26 is a perspective view illustrating a driving structure and a rack guide according to an embodiment of the disclosure.

FIG. 27 is a cross-sectional view illustrating a driving structure and a rack guide according to an embodiment of the disclosure.

The embodiments of FIGS. 26 and 27 may be partially combined with the embodiments of FIGS. 1 to 25.

Referring to FIGS. 26 and 27, an electronic device (e.g., the electronic device 101 of FIGS. 1 to 25) may include a driving structure 540, a motor 541, a pinion gear 544, a gear frame 548, or a rack guide 550.

The configuration of the driving structure 540, the motor 541, the gear frame 548, or the rack guide 550 in FIGS. 26 and 27 may be partially or wholly the same as the configuration of the driving structure 340 or 440, the motor 341 or 441, the gear frame 348 or 448, or the rack guide 350 or 450 in FIGS. 6 to 25.

According to an embodiment, the rack guide 550 may further include a second coupling portion 557 for coupling to the gear frame 548.

According to an embodiment, the second coupling portion 557 may be coupled to one surface of the gear frame 548 through a fastening member 558 (e.g., a bolt or a pin). For example, the second coupling portion 557 may be fixed to the gear frame 548. According to an embodiment, the second coupling portion 557 may be a portion coupled or connected to one end of the rack guide 550. Further, the second coupling portion 557 may have a plate shape.

According to an embodiment, one surface of the second coupling portion 557 and one surface of the gear frame 548 may be coupled through the fastening member 558 in a surface-to-surface contact state.

According to an embodiment, as the second coupling portion 557 and the gear frame 548 contact surface-to-surface, when external impact is applied to the electronic device, the rack guide 550 may be restricted or prevented from being rotated (or tilted) relative to the gear frame 548. According to an embodiment, as the relative rotation or tilting of the rack guide 550 is restricted, the damage of the rack gear disposed inside the rack guide 550 may be prevented.

An electronic device (e.g., a mobile terminal) may include a display having a flat surface or a flat surface and a curved surface. Electronic devices including displays may have limitations in implementing a screens larger than the size of an electronic device due to the fixed structure of the display. Therefore, electronic devices including rollable displays are being studied.

A rollable electronic device may be provided with an actuator such as a motor to implement a sliding motion. The motor may provide a driving force for the sliding movement of the rollable electronic device based on power provided from a battery.

Although in addition to power for the motor, the rollable electronic device consumes power for other electrical components, it may have limitations in increasing the capacity of the battery due to a limited space.

According to an embodiment of the disclosure, a rollable display and an electronic device including the same may be provided, which may provide a space in which the capacity of a battery may be increased in a limited space.

However, the problem to be solved in the disclosure is not limited to the problem mentioned above, and may be determined in various ways without departing from the spirit and scope of the disclosure.

According to an embodiment of the disclosure, a rollable display for stably guiding sliding movement of a housing while increasing the capacity of a battery, and an electronic device including the same may be provided.

The effects obtainable from the disclosure are not limited to the effects mentioned above, and other effects not mentioned may be clearly understood by those skilled in the art from the following description.

According to an embodiment of the disclosure, the electronic device 101 may include the first housing 201, the second housing 202 configured to slide relative to the first housing, the flexible display 203 including the first display area A1 and the second display area A2 extending from the first display area, the second display area configured to move based on the sliding movement of the second housing, the battery 289 disposed in the first housing, the rack gear 342 or 442 coupled to the first housing, the motor driver 341 or 441 disposed in the second housing and configured to provide a driving force for the sliding movement of the second housing by being connected to the rack gear, and the rack guide 350 or 450 disposed in the second housing and surrounding at least a portion of the rack gear.

According to an embodiment, the first housing may include the first frame 213 in which the battery is accommodated, and one end of the rack gear may be coupled to the first frame.

According to an embodiment, at least a portion of the rack gear may overlap the battery in a sliding movement direction of the second housing, with at least a portion of the first frame interposed therebetween.

According to an embodiment, the second housing may include the second frame 221 configured to slide relative to the first frame, and the rack guide may be coupled to the second frame and configured to slide relative to the rack gear.

According to an embodiment, the rack gear may include the gear portion 3421 kinetically connected to the motor driver, and the first coupling portion 3421 coupled to the first frame.

According to an embodiment, the first coupling portion may be welded to the first frame.

According to an embodiment, the rack guide may include the first portion 351 coupled to the second housing, the second portion 352 protruding from the first portion, and the third portion 353 extending from the second portion toward the rack gear.

According to an embodiment, the first portion may be coupled to the second housing by an adhesive member 360.

According to an embodiment, the rack gear may include the gear groove 3423 recessed on a side surface of the rack gear, and at least a portion of the third portion may be disposed in the gear groove.

According to an embodiment, the rack guide may include the first portion 451 disposed to cover gear teeth of the rack gear, the second portion 452 protruding from the first portion, and the third portion 453 extending from the second portion toward the rack gear and coupled to the second housing.

According to an embodiment, the third portion may be coupled to the second housing by an adhesive member 460.

According to an embodiment, the rack gear may include the gear groove 4424 recessed on a corner of the rack gear, and at least a portion of the third portion may be disposed in the gear groove.

According to an embodiment, a gap may be formed between the rack gear and at least a portion of the rack guide.

According to an embodiment, the rack guide 550 may be integrally formed with the second housing by insert injection.

According to an embodiment, the rack guide may include the plurality of protrusions 555 coupled to the second housing.

According to an embodiment, the electronic device may further include the gear frame 348, 448, or 548 coupled to the second housing, rotatably supporting the rotation shaft of the motor driver, and slidably supporting the rack gear.

According to an embodiment, the rack guide 550 may further include the second coupling portion 557 coupled to the gear frame.

According to an embodiment of the disclosure, the electronic device 101 may include the first housing 201, the second housing 202 configured to slide relative to the first housing, the flexible display 203 including the first display area A1 and the second display area A2 extending from the first display area, and configured to move the second display area based on the sliding movement of the second housing, the battery 289 disposed in the first housing, the rack gear 342 or 442 coupled to the first housing, the motor driver 341 or 441 disposed in the second housing and configured to provide a driving force for the sliding movement of the second housing by being connected to the rack gear, and the rack guide 350 or 450 disposed in the second housing, configured to slide relative to the rack gear, and surrounding at least a portion of the rack gear. At least a portion of the rack gear may overlap the battery in a first direction (e.g., the Y-axis direction in FIGS. 6 to 27) which is a sliding movement direction of the second housing.

According to an embodiment, at least a portion of the rack gear may not overlap the battery in a second direction (e.g., the X-axis direction in FIGS. 6 to 27) perpendicular to the first direction, and may not overlap the battery in a third direction (e.g., the Z-axis direction in FIGS. 6 to 27) perpendicular to the first direction and the second direction.

According to an embodiment, the rack guide may include the first portion 451 disposed to cover the gear teeth of the rack gear, the second portion 452 protruding from the first portion, and the third portion 453 extending from the second portion toward the rack gear and coupled to the second housing.

According to an embodiment, the electronic device may further include the gear frame 348, 448, or 548 coupled to the second housing, rotatably supporting the rotation shat of the motor driver, and slidably supporting the rack gear.

While a specific embodiment has been described above in the detailed description of the disclosure, it will be apparent to those skilled in the art that various modifications may be made without departing from the scope of the disclosure.

## Claims

1. An electronic device (101) comprising:
a first housing (201);
a second housing (202) configured to slide relative to the first housing;
a flexible display (203) including a first display area (A1) and a second display area (A2) extending from the first display area, the second display area configured to move based on the sliding movement of the second housing;
a battery (289) disposed in the first housing;
a rack gear (342, 442) coupled to the first housing;
a motor driver (341, 441) disposed in the second housing and configured to provide a driving force for the sliding movement of the second housing by being connected to the rack gear; and
a rack guide (350, 450) disposed in the second housing and surrounding at least a portion of the rack gear.

2. The electronic device of claim 1, wherein the first housing includes a first frame (213) in which the battery is accommodated, and
wherein one end of the rack gear is coupled to the first frame.

3. The electronic device of claims 1 and 2, wherein at least a portion of the rack gear overlaps the battery in a sliding movement direction of the second housing, with at least a portion of the first frame interposed therebetween.

4. The electronic device of claims 1 to 3, wherein the second housing includes a second frame (221) configured to slide relative to the first frame, and
wherein the rack guide is coupled to the second frame and configured to slide relative to the rack gear.

5. The electronic device of any one of claims 1 to 4, wherein the rack gear includes:
a gear portion (3421) kinetically connected to the motor driver; and
a first coupling portion (3421) coupled to the first frame.

6. The electronic device of any one of claims 1 to 5, wherein the first coupling portion is welded to the first frame.

7. The electronic device of any one of claims 1 to 6, wherein the rack guide includes:
a first portion (351) coupled to the second housing;
a second portion (352) protruding from the first portion; and
a third portion (353) extending from the second portion toward the rack gear.

8. The electronic device of any one of claims 1 to 7, wherein the first portion is coupled to the second housing by an adhesive member (360).

9. The electronic device of any one of claims 1 to 8, wherein the rack gear includes a gear groove (3423) recessed on a side surface of the rack gear, and
wherein at least a portion of the third portion is disposed in the gear groove.

10. The electronic device of any one of claims 1 to 9, wherein the rack guide includes:
a first portion (451) disposed to cover gear teeth of the rack gear;
a second portion (452) protruding from the first portion; and
a third portion (453) extending from the second portion toward the rack gear and coupled to the second housing.

11. The electronic device of any one of claims 1 to 10, wherein the third portion is coupled to the second housing by an adhesive member (460).

12. The electronic device of any one of claims 1 to 11, wherein the rack gear includes a gear groove (4424) recessed on a corner of the rack gear, and
wherein at least a portion of the third portion is disposed in the gear groove.

13. The electronic device of any one of claims 1 to 12, wherein a gap is formed between the rack gear and at least a portion of the rack guide.

14. The electronic device of any one of claims 1 to 13, wherein the rack guide (550) is integrally formed with the second housing by insert injection.

15. The electronic device of any one of claims 1 to 14, wherein the rack guide includes a plurality of protrusions (555) coupled to the second housing.
